(19) Europäisches Patentamt
European Patent Office
Office européen des brevets

(11) **EP 1 264 206 B1**

(12) **EUROPÄISCHE PATENTSCHRIFT**

(45) Veröffentlichungstag und Bekanntmachung des Hinweises auf die Patenterteilung:
**17.12.2003 Patentblatt 2003/51**

(21) Anmeldenummer: **01901110.5**

(22) Anmeldetag: **31.01.2001**

(51) Int Cl.[7]: **G02B 26/02**, G02B 6/26, G02B 6/35

(86) Internationale Anmeldenummer:
**PCT/CH01/00072**

(87) Internationale Veröffentlichungsnummer:
**WO 0105/7578 (09.08.2001 Gazette 2001/32)**

(54) **SCHALTERANORDNUNG FÜR STRAHLUNGSLEITER**
SWITCHING ARRANGEMENT FOR A RADIATION GUIDE
CIRCUIT POUR GUIDE DE RAYONNEMENT

(84) Benannte Vertragsstaaten:
**CH DE FR GB LI**

(30) Priorität: **31.01.2000 EP 00810088**
**30.05.2000 EP 00810475**

(43) Veröffentlichungstag der Anmeldung:
**11.12.2002 Patentblatt 2002/50**

(73) Patentinhaber: **Sercalo Microtechnology Ltd.**
**9494 Schaan (LI)**

(72) Erfinder: **MARXER, Cornel**
**CH-2000 Neuchâtel (CH)**

(74) Vertreter: **Hasler, Erich, Dr.**
**c/o Riederer Hasler & Partner**
**Patentanwälte AG**
**Kappelestrasse 15**
**9492 Eschen (LI)**

(56) Entgegenhaltungen:
**EP-A- 0 411 607**
**WO-A-98/12589**
**US-A- 5 780 948**
**US-A- 5 998 906**

- **PATENT ABSTRACTS OF JAPAN vol. 1996, no. 12, 26. Dezember 1996 (1996-12-26) & JP 08 201857 A (HITACHI CABLE LTD;NIPPON TELEGR & TELEPH CORP <NTT>), 9. August 1996 (1996-08-09)**
- **MARXER C ET AL: "VERTICAL MIRRORS FABRICATED BY DEEP REACTIVE ION ETCHING FOR FIBER-OPTIC SWITCHING APPLICATIONS" JOURNAL OF MICROELECTROMECHANICAL SYSTEMS,US,IEEE INC. NEW YORK, Bd. 6, Nr. 3, 1. September 1997 (1997-09-01), Seiten 277-284, XP000727196 ISSN: 1057-7157**
- **JUAN W -H ET AL: "HIGH-ASPECT-RATIO SI VERTICAL MICROMIRROR ARRAYS FOR OPTICAL SWITCHING" JOURNAL OF MICROELECTROMECHANICAL SYSTEMS,US,IEEE INC. NEW YORK, Bd. 7, Nr. 2, Juni 1998 (1998-06), Seiten 207-212, XP000834740 ISSN: 1057-7157**

EP 1 264 206 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

### Technisches Gebiet

Die Erfindung betrifft eine Strahlungsleiterschalteranordnung gemäß dem Oberbegriff des Patentanspruchs 1 sowie ein Verfahren zu deren Herstellung gemäß dem Oberbegriff des Patentanspruchs 10.

### Stand der Technik

Aus der WO 98/12589 ist eine Strahlungsleiteranordnung bekannt. Die bekannte Anordnung hatte vier sternförmig aufeinander zulaufende Lichtleitereinschubkanäle mit eingelegten Lichtleitern. Im Treffpunkt der Verlängerung der Leiterenden war ein verschiebbares Schaltteil angeordnet. Das Schaltteil konnte aus dem Treffpunkt herausgezogen werden, wodurch dann eine Lichtübertragung jeweils zwischen zwei gegenüberliegenden Lichtleiterenden möglich war. Bei eingeschobenem Schaltteil war diese Lichtübertragung unterbunden. Da das Schaltteil verspiegelt war, ergab sich dann eine Lichtübertragung über die Spiegelfläche zwischen zwei benachbarten, unter 90° zueinander angeordneten Leiterenden. Die Faserenden der Lichtleiter waren verjüngend ausebildet. Die Faserenden sowie auch der Spiegel konnten in ein Index-Matching Öl gelegt werden.

Der Schaltteil war an einem filigran ausgebildeten Halter angeordnet, der links und rechts zwei hintereinander angeordnete Blattfederpaare aufwies. Die Längsseiten jeder Blattfeder hatten eine erste Kammstruktur, welche in eine zweite ortsfest an einer Grundplatte angeordnete Kammstruktur eingriff. Durch Anlegen einer elektrischen Spannung konnten die Kammstrukturen gegeneinander gezogen oder voneinander abgestoßen werden, wodurch das Schaltteil in den Treffpunkt hinein- oder aus diesem herausgezogen wurde. Für jeweils eine definierte Lage des Schaltteils war ein mechanischer Anschlag an den Blattfedern vorgesehen.

### Darstellung der Erfindung

### Aufgabe der Erfindung

Aufgabe der Erfindung ist es, eine Strahlungsleiterschalteranordnung zu schaffen, welche geringe bzw. exakt einstellbare Strahlungsverluste bei einem einwandfreien Schaltverhalten aufweist.

### Lösung der Aufgabe

Die Lösung der Aufgabe wird dadurch erreicht, dass eine Strahlungsleiteranordnung mit wenigstens einem Strahlungsleiterschalter aus einem Sandwich-Wafer mit einem Substrat, einer Deckschicht und einer elektrisch isolierenden Zwischenschicht hergestellt wird. Jeder Strahlungleiterschalter hat wenigstens einen verschiebbaren Schaltteil sowie wenigstens zwei in einer Ebene zu liegen kommende Strahlungsleiterenden. Die Strahlungsleiterenden sind derart nah benachbart zueinander angeordnet, dass mit dem Schaltteil aus einem Strahlungsleiterende austretende Strahlung auf ihrem optischen Weg zu einem anderen Leiterende abblockbar bzw. in dieses hinein reflektierbar ist. Der den Schaltteil aufnehmende Zwischenraum ist erfindungsgemäß mit einer einen vorgegebenen Brechungsindex aufweisenden Index-Matching-Flüssigkeit gefüllt. Der strahlungsführende Kern jedes Strahlungsleiters steht an Leiterende über die Faserstirnfläche hervor und der hervorstehende Bereich ist derart verjüngend ausgebildet, dass im Zusammenwirken mit dem Brechungsindex der Index-Matching-Flüssigkeit und dem freien Kemprofil im mit Flüssigkeit gefüllten Raum eine Strahlungskollimation erreichbar ist.

Es ist somit nicht ausreichend, die Strahlungsleiterenden möglichst nah zueinander anzuordnen. Der Endbereich jedes Strahlungsleiters und der Brechungsindex einer Index-Matching-Flüssigkeit zwischen den Strahlungsleiterenden sollten derart aufeinander abgestimmt werden, daß eine gute Strahlungsübertragung zwischen den Strahlungsleiterenden gegeben ist. Um eine gute Strahlungsübertragung zu erreichen, werden die Leiterenden derart ausgebildet und eine entsprechende Index-Matching-Flüssigkeit derart ausgewählt, dass die aus einem Leiterende austretende Strahlung mit nur geringen Verlusten zum anderen Leiterende geführt wird. Eine möglichst verlustfreie Strahlungsführung im freien, mit Index-Matching-Flüssigkeit gefüllten Raum zwischen den Enden ist erreichbar, wenn es gelingt, den aus dem Leiterende austretenden Strahl mit gleichem Strahldurchmesser auf das andere Leiterende zu führen. D.h. aus dem Leiterende muss ein kollimierter Strahl austreten. Eine Strahlungskollimation wird erreicht, indem der die Strahlung führende Leiterkem in seinem Endbereich sich verjüngend ausgebildet wird und die Index-Matching-Flüssigkeit derart ausgesucht wird, dass ihr Brechungsindex bezogen auf die im Strahlungsleiter zu transmittierende Strahlung zusammen mit dem Kemprofil den gewünschten Linseneffekt zur Strahlungskollimierung ergibt.

Der Brechungsindex der Index-Matching-Flüssigkeit sollte höchstens gleich groß wie der Brechungsindex jedes Strahlungsleiterkems sein. Bevorzugt wählt man den Brechungsindex der Flüssigkeit zwischen 99,90% und

98,00% bezogen auf den Kembrechungsindex. Sehr gute Ergebnisse sind bei eines Brechungsindex zwischen 99,4% und 98,6% erreichbar. Bei einem kleinen Abstand der Leiterenden voneinander (im Bereich von 30 μm) liegt ein guter Wert des Berechungsindexes im Bereich von 99,1% (bei 25°C). Dieser Wert erlaubt eine stabile Kopplung in einem Temperaturbereich zwischen -10°C und 85°C bei einer Wellenlänge zwischen 1250 nm und 1630 nm. Bei einem größeren Abstand sollte dieser Wert steigen.

Bei der erfindungsgemäßen Strahlungsleiterschalteranordnung werden Strahlungsleiterschalter auch mit einem verspiegelten Schaltteil verwendet. Wird ein derartiges Schaltteil eingesetzt, so ist einmal eine "Strahlungsdurchschaltung" zwischen einander gegenüberliegenden Strahlungsleiterenden bei aus dem Zwischenraum herausgezogenem Schaltteil möglich, wie bereits oben angedeutet. Beim in den Zwischenraum eingeschobenen Schaltteil ist diese Strahlungsdurchschaltung unterbrochen; jetzt kann jedoch aus einem Strahlungsleiter austretende Strahlung in einen anderen Strahlungsleiter eingespiegelt (durchgeschaltet) werden. Bei einer "geraden" Durchschaltung tritt der kollimierte Strahl aus dem einen Leiter aus und in den gegenüberliegenden ein. Im anderen Fall wird der kollimierte Strahl durch den Spiegel umgelenkt. Damit dieses Schaltspiel mit minimalen Strahlungsverlusten funktionieren kann, müssen die Strahlungsleiterenden sowie die spiegelnde Fläche exakt positioniert sein. Hierzu legt man alle zu schaltenden Strahlungsleiterenden in eine Ebene. Senkrecht auf dieser Ebene müssen dann die Spiegelflächen des Schaltteils stehen. Es hatte sich nun gezeigt, dass ein verspiegeltes Schaltteil, welches nach dem in der WO98/12589 beschriebenen Verfahren hergestellt worden ist, von der Senkrechten abweichende Spiegelflächen aufwies, was dann zu zusätzlichen Strahlungsverlusten zwischen zwei Leiterenden führte.

Es wurde nun festgestellt, dass die von der Senkrechten abweichenden Flächen des Schaltteils der WO98/12589 im dort beschriebenen Ätzvorgang begründet waren. Im Gegensatz zur WO98/12589 wird nun in geringem Abstand vor den durch Ätzen herzustellenden Spiegelflächen des Schaltteils je ein Opfersteg erzeugt. Hierdurch ist ein Ätzionen aufnehmender Raum vor den herzustellenden Spiegelflächen stark reduziert, wodurch ein schräges Ätzen unterbunden werden kann bzw. stark minimiert wird. Derartig hergestellte Spiegelflächen stehen jetzt senkrecht.

Unter einem einwandfreien Schaltverhalten wird nicht nur eine möglichst verlustfreie Strahlungsübertragung in der "Durchschaltstellung" des Schalters verstanden. Es müssen auch die Schaltzeiten reproduzierbar und rasch vorgenommen werden können. Es werden hierunter jedoch auch Schaltvorgänge verstanden, mit denen eine vorgegebene Dämpfung einstellbar ist. Bei dem aus der WO98/12589 bekannten Strahlungsleiterschalter ergaben sich jedoch unterschiedliche Schaltzeiten; auch mussten an der Kammstruktur jedes, einen Schaltteil aufweisenden, Halters hohe Spannungen angelegt werden, damit ein "Losreisseffekt" von einer Schaltstellung in die andere überwunden werden konnte.

Dieser "Losreisseffekt" konnte in der unten beschriebenen Ausführung eliminiert werden, indem nicht mehr zwei identische ineinandergreifende Kammstrukturen verwendet wurden, sondern bei einer der beiden Kammstrukturen der Zinkenendbereich eine Querschnittsverbreiterung aufweist. Es ist somit eine zur ersten Kammstruktur passende zweite ortsfeste Kammstruktur vorhanden. Die Kammzinken der zweiten Kammstruktur sind auf Lücke zur ersten Kammstruktur angeordnet. An beiden Kammstrukturen ist eine erste und eine zweite elektrische Spannung zur Erzeugung einer elektrostatischen Verschiebung anlegbar. Es ist nun möglich die Querschnittsverbreiterung derart auszuführen, d. h. mit einer elektrostatischen Spannungsbelegung derart auszubilden, dass der Schaltteil in einer stabilen Lage haltbar ist.

Mit dem Halter ist wenigstens ein Blattfederelement fest verbunden. Die Blattfederelemente sind annähernd senkrecht zur Bewegungsrichtung des Halters verlaufend ausgebildet.

Es hat sich ferner gezeigt, dass durch diese unten noch genauer beschriebene Ausbildung die Index-Matching-Flüssigkeit leicht aus den Zinkenzwischenräumen verdrängbar war. Hieraus ergab sich gegenüber dem Schalter der WO98/12589 ein rascheres Schaltverhalten.

Die elektrostatische Kraft zwischen benachbarten Zinken der ersten und zweiten Kammstruktur hängt von der Spaltbreite zwischen diesen Zinken ab. Die Spaltbreite bei einer konischen, pfeilartigen Zinkenausbildung ändert sich über dem gegenseitigen Abstand der beiden Strukturen stärker als bei Zinken gleicher Dicke wie in der W098/12589. Aus diesem Grund konnte auf die Bewegungsanschläge der WO98/12589 verzichtet werden; ein Losreisseffekt tritt nun erfreulicherweise nicht mehr auf.

Der Schaltteil kann auch nicht spiegelnd ausgebildet werden. Man kann ihn dann derart in einen strahlungsführenden Raum im Zwischenraum zwischen jeweils zwei Leiterenden einschieben, dass eine vorgegebene Dämpfung der Strahlung erfolgt. Den in den strahlungsführenden Raum einschiebbare Dämpfungsteil des Schaltteils wird man vorzugsweise mit einer Metallbeschichtung versehen. Auch wird man den dämpfenden Bereich des Schaltteils insbesondere nicht mehr senkrecht zur fluchtenden Achse der beiden Leiterenden anordnen, sondern unter einem Winkel $\alpha$ kleiner als 65°, vorzugsweise kleiner als 50°. Hierdurch kann eine polarisationsabhängige Dämpfung durch den eingeschobenen Dämpfungsteil verringert werden.

Anstatt wie oben ausgeführt nur mit einem Schaltteil zu arbeiten, können mehrere Schaltteile in einem einzigen Strahlungsleiterschalter eingesetzt werden. Jedes Schaltteil ist dann derart vor jeweils zwei Strahlungsleiterenden zweier Strahlungsleiter schiebbar, dass eine Strahlungsüberkopplung bzw. -dämpfung möglich ist. Vorzugsweise sind

die Schaltteile den Strahlungsleiterenden derart zugeordnet, dass Ausgangsstrahlungen von mehreren Strahlungsleiterenden jeweils einzeln je nach Schaltstellung eines der Schaltteile in ein einziges Strahlungsleiterende einkoppelbar ist. Auch kann die Anordnung wahlweise derart ausgebildet werden, dass die Ausgangsstrahlung aus einem einzigen Strahlungsleiterende jeweils einzeln je nach Schaltstellung eines der Schaltteile in eines der anderen Strahlungsleiterenden einkoppelbar ist.

Vorzugsweise wird man ein fluiddichtes Gehäuse mit fluiddichten Durchführungen für die Strahlungsleiter und die elektrischen Leitungen vorsehen. Der Gehäuseinnenraum ist dann bis auf eine Gasblase mit der Index-Matching-Flüssigkeit gefüllt. Das Volumen der Gasblase ist derart vorgegeben ist, dass ein Druck im Gehäuseinnenraum infolge thermischer Effekte einen vorgegebenen Wert nicht über- bzw. unterschreitet.

Anstelle einer einzigen Strahlungsleiterschaltanordnung können mehrere in einer Ebene matrizenartig, bevorzugt auf einem ersten Chip angeordnete Schalter erzeugt werden. Dieser Chip hat insbesondere integrierte elektrische Leiterteilstücke für an die Schalter anzulegende elektrische Spannungen. Für die optischen und bevorzugt die elektrischen Verbindungen zwischen den Schaltern ist dann ein zweiter, als Wellenleiterchip ausgebildeter, bevorzugt in Flip-Chip-Technik aufgebrachter Chip vorhanden.

Die Strahlungsleiterschalteranordnung mit wenigstens einem einen Schaltteil aufweisenden Strahlungsleiterschalter wird aus einem Sandwich-Wafer hergestellt. Der Sandwich-Wafer hat ein Substrat, eine Deckschicht und eine elektrisch isolierende Zwischenschicht. Das Schaltteil ist, wie bereits oben ausgeführt, vor wenigstens zwei in einer Ebene liegenden Strahlungsleiterenden verschiebbar. Die Strahlungsleiterschalteranordnung u.a. mit dem Schaltteil und den Führungskanälen für die Strahlungsleiter bzw. deren Enden wird durch einen Ätzvorgang aus dem Sandwich-Wafer erzeugt. Mit dem Ätzvorgang wird in unmittelbarer Nähe der jeweils senkrecht zur Ebene verlaufenden Außenseiten des Schaltteils wenigstens ein Opfersteg erzeugt, um einen von der Senkrechten zur Ebene abweichenden Verlauf der Außenseiten zu vermeiden.

Der Sandwich-Wafer hat eine im wesentlichen aus Silizium bestehende Deckschicht, deren nicht maskierte Bereiche in einem Ionenätzverfahren entfernt werden. Jeder Opfersteg hat bei einer Deckschichtdicke von etwa 73 $\mu$m mit einer Dickentoleranz +/- 3 $\mu$m einen Abstand von etwa 10 $\mu$m mit einer Abstandstoleranz von -5 $\mu$m bis +20 $\mu$m.

**Kurze Beschreibung der Zeichnungen**

Im folgenden werden Beispiele der erfindungsgemäßen Strahlungsleiterschalteranordnung sowie deren Herstellung anhand von Figuren näher erläutert. Weitere Vorteile der Erfindung ergeben sich aus dem nachfolgenden Beschreibungstext. Es zeigen:

Fig. 1 — eine Draufsicht auf einen Strahlungsleiterschalter der erfindungsgemäßen Strahlungsleiterschalteranordnung,

Fig. 2 — einen Längsschnitt durch einander gegenüberliegende Strahlungsleiterenden der in **Figur 1** dargestellten Anordnung in vergrößerter Darstellung zur Erklärung einer Strahlungskollimierung zwischen den Leiterenden,

Fig. 3a und 3b — eine Variante zu dem in **Figur 1** gezeigten Strahlungsleiterschalter, welcher sich bevorzugt in eine in den **Figuren 9** bis **11** gezeigten, matrixartigen Strahlungsleiterschalteranordnung einsetzen lässt, wobei **Figur 3a** einen Strahlungsleiterschalter mit eingeschobenem Schaltteil und **Figur 3b** mit herausgezogenem Schaltteil zeigt,

Fig. 4a bis e — eine schematische Darstellung einiger möglicher Kammstrukturen für einen Strahlungsleiterschalter und der Verlauf einer mit ihnen erzeugbaren elektrostatischen Kraft **F** in Abhängigkeit des Kammzinkenendabstands **x** in der Struktur, wobei

- Fig. 4a — eine aus der WO98/12589 bekannte Kammstruktur mit identisch ausgebildeten dünnen Kammzinken,
- Fig. 4b — eine Kammstruktur mit einer Zinkenreihe, deren Zinken identisch zu den in Fig. 4a sind, und die andere Zinkenreihe einen quaderförmigen Querschnitt aufweist, der an einem schmalen Zinkensteg angeordnet ist,
- Fig. 4c — eine Kammstruktur mit einer Zinkenreihe, deren Zinken identisch zu den in Fig. 4a sind, und die andere Zinkenreihe Zinken hat, welche analog zur zweiten Zinkenreihenausbildung der Figur 4b sind, wobei allerdings die freien Zinkenenden verjüngend (pfeilartig)

ausgebildet sind,

Fig. 4d eine Kammstruktur mit einer Zinkenreihe, deren Zinken analog zu denjenigen der **Figur 4c** ausgebildet sind; es ist lediglich der "pfeilartige" Übergang durch einen stufenförmigen ersetzt und

Fig. 4e eine Kammstruktur mit Zinkenreihen analog zur Ausbildung in **Figur 4b** wobei jedoch die Zinken einer Reihe zusätzlich einen Quersteg aufweisen,

Fig. 5 einen Querschnitt durch einen maskierten SOI-Wafer für die Herstellung des erfindungsgemäßen Strahlungsleiterschalters,

Fig. 6 einen Querschnitt analog zu **Figur 5**, jedoch nach Vornahme eines tiefen anisotropen reaktiven Ionenätzverfahrensschritts,

Fig. 7 einen Querschnitt analog der **Figuren 5** und **6,** jedoch nach Durchführung eines weiteren Ätzschrittes zur Fertigstellung des erfindungsgemäßen Strahlungsleiterschalters, wobei in diesem Schritt auch die Opferstege zur Erzeugung einer Vertikalität der Schaltteiloberflächen entfernt werden,

Fig. 8 einen Querschnitt durch eine fluiddicht verkapselte Strahlungsleiterschalteranordnung,

Fig. 9 eine Draufsicht auf einen Schalterchip mit sechzehn matrixartig angeordneten Strahlungsleiterschaltern,

Fig. 10 eine Draufsicht auf einen mit dem in **Figur 9** dargestellten Schalterchip mittels Flip-Chip-Bonding verbindbaren Leiterchip,

Fig. 11 einen Querschnitt durch die in Flip-Chip-Technik hergestellte matrixartige Strahlungsleiterschalteranordnung entlang der Linie XI - XI in **Figur 9,**

Fig. 12 eine schematische Darstellung eines als Dämpfungseinheit verwendbaren Strahlungsleiterschalters in einer Schaltstellung mit Grunddämpfung,

Fig. 13 die in **Figur 12** dargestellte Dämpfungseinheit mit einer vorgegebenen Dämpfung bei einem um einen vorgegebenen Weg eingefahrenen Dämpfungsteil,

Fig. 14 eine arrayartige Anordnung von in den **Figuren 12** und **13** dargestellten Dämpfungseinheiten,

Fig. 15 eine Varainte zu den in den **Figuren 1 und 9** gezeigten Strahlungsleiterschaltem mit mehreren Schaltteilen und

Fig. 16 zwei um einen Winkel $\ominus$ gegeneinander verkippte und um einen Wert **r** gegeneinander versetzte strahlungsleitende Kerne von Leiterenden in einem gegenseitigen Abstand **z**.

## Wege zur Ausführung der Erfindung

Der in **Figur 1** dargestellte erfindungsgemäße Strahlungsleiterschalter **2** einer Strahlungsleiterschalteranordnung **4** ist mittels eines unten beschriebenen Herstellungsverfahrens aus einem SOI-Wafer **39** (silicon-on-insulator) als Sandwich-Wafer erzeugt worden. Der Strahlungsleiterschalter **2** weist vier unter rechten Winkeln zueinander angeordnete Strahlungsleitereinschubkanäle **1.1a** bis **1.1d** auf, in die nach der Herstellung des Schalters mit Spitzen versehene, zum Faserende gemäß untenstehender Beschreibung sich verjüngende Strahlungsleiter **49** einschiebbar sind. Alle Strahlungsleitereinschubkanäle **1.1a** bis **1.1d** liegen in einer einzigen Ebene und laufen auf einen zentralen Raum **5.1** zu, in den verschiebbar ein Schaltteil **7.1**, welcher hier an seinen Seitenflächen verspiegelt ausgebildet ist, eingreift. Bei in den Raum **5.1** eingeschobenem Schaltteil **7.1** ist dann eine Signalübertragung zwischen den in den Einschubkanälen **1.1a** und **11.d** sowie **1.1b** und **1.1c** eingeschobenen Strahlungsleitem gegeben. Ist der Schaltteil **7.1** herausgezogen, ist eine Signalübertragung zwischen den in den Einschubkanälen **1.1a** und **1.1c** sowie **1.1b** und **1.1d** eingeschobenen Strahlungsleitem möglich. In **Figur 1** ist der Schaltteil **7.1** in einer spannungslosen Zwischenstellung gezeichnet.

Neben den Seitenwänden des Schaltteils **7.1** sind hier noch zwei Opferstege **3a** und **3b** vorhanden, welche vor dem Betrieb der Strahlungsleiterschalteranordnung **4,** wie unten ausgeführt wird, entfernt werden. Die Strahlungsleiter **49** werden derart in die Strahlungsleitereinschubkanäle **1.1a** bis **1.1d** eingeschoben, dass jeweils der die Strahlung führende Kern jedes Strahlungsleiters unmittelbar vor der betreffenden, hier beispielsweise verspiegelten, Seitenwand des Schaltteils **7.1** zu liegen kommt.

Der Schaltteil **7.1** des Strahlungsleiterschalters **2** ist durch einen Schlitz **18.1** in den Raum **5.1** hinein- und herausschiebbar. Durch Ätzen hergestellte Vertiefungen sind in **Figur 1** schwarz dargestellt. Der Schaltteil **7.1** ist an einem filigranen Halter **19.1** angeordnet, der im Schlitz **18.1** in seiner Achsenlängsrichtung verschiebbar ist. Die nachfolgend erläuterten Bauelemente des Strahlungsleiterschalters **2** werden hier nur kurz umrissen und später im Detail an dem in den **Figuren 3a** und **3b** vergrößert dargestellten Strahlungsleiterschalter **20** beschrieben. An dem dem Schaltteil **7.1** entgegengesetzten Halterende sowie etwa in dessen Mitte ist senkrecht zu dessen Längsachse des Halters **19.1** je ein sich zu beiden Seiten erstreckendes Tragbälkchen **21.1a** und **21.1b** ebenfalls mit filigraner Struktur angeordnet. An den Balkenlängsseiten ist jeweils eine Kammstruktur **22.1a** bis **22.1b** mit vom Raum **5.1** weggerichteten, ersten Kammzinken **23a** bzw. **23b** ausgebildet. Auf Lücke zu den ersten Kammzinken **23a** bzw. **23b** sind zweite ortsfeste Kammzinken **24a** bzw. **24b** angeordnet. Diese Kammzinkenanordnung ist vergrößert in **Figur 4c** dargestellt und deren elektrostatische Kraftwirkung unten beschrieben. Einander gegenüberliegende Kammzinken **23a** und **24a** bzw. **23b** und **24b** des Strahlungsleiterschalters **2** sind unterschiedlich ausgebildet. Die Kammzinken **23a** bzw. **23b** sind als gerade Stäbchen und die gegenüberliegenden Kammzinken **24a** und **24b** in Zinkenendbereich verdickt. Zum Zinkenende hin sind sie derart konisch verjüngt ausgebildet, dass ein Erscheinungsbild einer Pfeilspitze bzw. die Kammzinkenreihe das Erscheinungsbild einer "Alleebaumreihe" ergibt. An den Tragbälkchen **21.a** und **21b** sind beidseits des Halters **19.1** je eine U-förmige, jeweils zwei Blattfederelemente aufweisende Blattfedem **51a, 51b, 52a** und **52b** angeordnet.

Der Strahlungsleiter **2** hat zwei Bondingmarkierungen **61 a** bis **61c** aufweisende Deckschichtbereiche **60** und **65,** welche als elektrischer Anschluss für eine auf die Kammstruktur **22.1a** und **22.1 b** wirkende elektrische Spannung dienen. Mit dem Deckschichtbereich sind die Kammzinken **24a** und **24b** verbunden. Die Kammzinken **23b** cfer Kammstruktur **22.1b** sind über die Blattfedern **51a** und **51b** sowie das Tragbälkchen **21.1a** mit dem Deckschichtbereich **60** verbunden. Die elektrische Verbindung zu den Kammzinken **23a** der Kammstruktur **22.1a** erfolgt vom Tragbälkchen **21.1a** über den Halter **19.1** und das Tragbälkchen. Der Schaltteil **7,** der Halter **19**, die Tragbälkchen **21a** und **21b**, die an letzteren angeordneten Kammzinkenanordnung **23a** bzw. **23b** sind über jeweils zwei paarweise links und rechts des Halters ausgebildete Federelemente **51a** und **51b** sowie **52a** und **52b** schwebend an der Deckschicht **60** gehalten.

Als Strahlungsleiter **49** wird bevorzugt, wie in **Figur 2** dargestellt, ein Monomodeleiter verwendet. Der Strahlungsleiter **49** besteht aus Quarzglas, dessen Kem (Core) **8** unterschiedlich von der Ummantelung (Cladding) **9a** dotiert ist und dessen Aussenummantelung **9b** eine Plastikschutzhülle ist. Die Strahlungsleiter **49** werden mit einer Lösung geätzt, bei der ein Teil 40-prozentiger Flusssäure mit zehn Teilen 40-prozentigem Ammoniumfluorid und 60% Wasser gepuffert sind. Das durch die Ätzung erhaltene Profil ist in **Figur 2** dargestellt. Die einen konstanten Durchmesser von 125 μm aufweisende Kemummantelung **9a** geht in einem konischen Übergang **11** auf einen einen annähernd konstanten Durchmesser von etwa 25 μm aufweisenden dünnen, durch Ätzen verjüngten Kernummantelungsendbereich **12** über. Der etwa 8 μm dicke Kem **8** endet in einer konischen Spitze **13.** Wie unten ausgeführt, wirken die Spitzen **13** zusammen mit einer die Spitzen **13** umgebenden Index-Matching-Flüssigkeit **87** als Kollimator, der die aus dem Kern **8** an der Spitze **13** austretende Strahlung als parallelen Strahl **14** in den Kem **8** des jeweils gegenüberliegenden Strahlungsleiters **49** einkoppelt. Die am verjüngten Kemummantelungsübergang **11** reflektrierte Strahlung wird jedoch in einem zu großen Winkel zurückreflektiert, um noch im Kern **8** des Leiters geführt zu werden. Diese Strahlung wird somit durch den Mantel (Cladding) **9a** refraktiert und geht so verloren; Rückreflexionen werden somit stark unterdrückt, wodurch eine ausgezeichnete Rückflussdämpfung (Retum Loss) erreicht wird.

Die in **Figur 2** gezeigte Kontur der Kernummantelung **9a** mit der zweistufigen Verjüngung ist insbesondere deshalb gewählt, damit die Strahlungsleiterenden **6** im Raum **5.1** möglichst nah zueinander gebracht werden können. Eine Kemummantelung 9a mit dem ursprünglichen Durchmesser würde dies verunmöglichen. Um die in **Figur 2** gezeigte Kontur herzustellen, wird die Plastikschutzhülle **9b** auf einer Länge von etwa 20 mm entfernt. Mittels eines Faserbrechwerkzeugs wird dann die Glasfaser in einem Abstand vom Ende der Außenummantelung, der dem dünnen Durchmesser **12** entsprechen soll, so gebrochen, dass eine saubere gebrochene Fläche entsteht. Wird nun geätzt, so bildet die noch verbleibende Platikschutzhülle **9b** eine Ätzmaske und die Ätzflüssigkeit kann nur an das vorstehende Ende der Glasfaser gelangen. Während des Ätzvorgangs dringt jedoch die Ätzflüssigkeit entlang dem Übergang Glasfaser-Schutzhülle **9a/9b** ein, wodurch der gewünschte konische Übergang **11** erreicht wird.

Der Brechungsindex des Kerns 8 des Strahlungsleiters **49** liegt bei 1,445. Ein bevorzugter Brechungsindex der Index-Matching-Flüssigkeit sollte bei 1,43 bis 1,44 liegen. Als Flüssigkeit mit einem derartigen Brechungsindex kommen beispielweise Ethylcyclohexane, Cyclododecane, Butyrolacetone, Cyclohexane, Cyclohexylacetate, tert-Butylcyclohexane und Decanonitrile in Frage. Sofern die Index-Matching-Flüssigkeit aufgeheizt wird, können beispielsweise mit einem Brechungsindex größer 1,45 auch Limonene, Myrcene und Decalin verwendet werden; durch Heizen

verringert sich der Brechungsindex. Weniger geeignet, aber noch brauchbar sind z.B. Octane, Octene, Siliconöle, Decane und Dodecane, weiche einen Brechungsindex kleiner 1,42 haben.

An jeweils einer Seitenwand **15a** bis **15d** der Strahlungsleitereinschubkanäle **1.1 a** bis **1.1 d** sind in **Figur 1** mehrere (hier drei) federnde Laschen **16** ausgebildet. Diese Laschen **16** drücken nun die eingeschobenen Strahlungsleiter **49** an die andere gegenüberliegende Kanalwand **17.1a, 17.1 b, 17.1 c** bzw. **17.1d**. Der entsprechende Strahlungsleiter **49** ist hierdurch im Kanal **1.1 a** bis **1.1d** festgeklemmt Der Einschiebewiderstand, hervorgerufen durch diese Laschen **16,** ist gering.

Zwischen den beiden Anordnungen - Federelemente, Tragbälkchen, Kammstruktur **51a, 51b, 21 a, 22a** und **52a, 52b, 21 b, 22b** - hat der den Halter **19.1** aufnehmende Schlitz **18** Äusnehmungen **63** und hierzu versetzt der Halter **19** Noppen **64.** Die Ausnehmungen **63** und die Noppen **64** sind zur Halterachse bzw. zur Mittellinie des Schlitzes **18.1** symmetrisch angeordnet Die Gesamtbreite, gemessen über zwei an links und rechts des Halterschaftes angeordneten Noppen **64** ist nur um eine Toleranz kleiner als die Breite des Schlitzes **18.1.** Die Noppen **64** und die Ausnehmungen **63** sind in der Ruhestellung des Schaltteils **7.1** derart zueinander angeordnet, dass der größere Längsteil der Noppen **64** im ausnehmungsfreien Teil des Spaltes **18.1** und nur ein Noppenteilbereich, der der Längsrichtung der Halterbewegung im Schaltvorgang entspricht, über der jeweiligen Ausnehmung **63** liegt Wird nun eine elektrische Spannung zwischen dem Deckschichtbereich **60** und dem Deckschichtbereich **65** angelegt, so wirkt eine elektrostatische Anziehungskraft, wie oben beschrieben, über die Kammstruktur **22.1a** und **22.1b** sowie auch über die Noppen **64** und die "Ausnehmungsstruktur" auf den Halter **19.1.**

Details des Strahlungsleiterschalters **2** werden in den **Figuren 3a** und **3b** an Hand eines Strahlungsleiterschalters **20** beschrieben. Der Strahlungsleiterschalter **20** ist analog zum Strahlungsleiter **2** ausgebildet. Er ist jedoch derart ausgelegt, dass er elektrisch einmal in einer eingeschobenen "aktiven" Gleichgewichtslage [Signalübertragung zwischen Strahlungsleitern in den zu den Kanälen **1.1a** bis **1.1d** analog ausgebildeten Kanälen **1.2b** und **1.2a** bei einer anderen angelegten Spannung und in einer weiteren Lage in einer herausgerückten "aktiven" Gleichgewichtslage [Signalübertragung zwischen Strahlungsleitern in den Kanälen **1.2a** und **1.2b** verbleibt. Der Strahlungsleiterschalter **20** ist gegenüber der Lage des Strahlungsleiters **2** in einer Lage gezeichnet, wie er zusammen mit weiteren fünfzehn Strahlungsleiterschaltern im unten beschriebenen Schalterchip **127** eingesetzt wird. Analoge Elemente der Strahlungsleiterschalter **2** und **20** sind mit gleichen Bezugszeichen bezeichnet, aber durch "**.1**" für den Strahlungsleiter **2** und mit "**.2**" für den Strahlungsleiter **20** gekennzeichnet.

Der Schaltteil **7.2** des Strahlungsleiterschalters **20** ist durch einen Schlitz **18.2** in den Raum **5.2** hinein- und herausschiebbar. Er ist an einem filigranen Halter **19.2** angeordnet, der im Schlitz **18.2** läuft. An dem dem Schaltteil **7.2** entgegengesetzten Halterende sowie etwa in dessen Mitte ist senkrecht zu dessen Längsachse des Halters **19.2** je ein sich zu beiden Seiten erstreckendes Tragbälkchen **21.2a** und **21.2b** ebenfalls mit filigraner Struktur angeordnet An den Balkenlängsseiten ist jeweils eine Kammstruktur **22.2a** bis **22.2b** mit vom Raum **5.2** weggerichteten, ersten Kammzinken **23.2a** und einer zu diesem hingerichteten Kammzinkenreihe **24.2b** ausgebildet. Auf Lücke zu den ersten Kammzinken **23.2a** bzw. **24.2b** sind zweite ortsfeste Kammzinken **24.2a** bzw. **23.2b** angeordnet. Die Kammzinken **23.2a, 23.2b, 24.2a** und **24.2b** sind identisch, jedoch einander zugeordnete Paare spiegelbildlich zueinander ausgebildet, wie in **Figur 4d** dargestellt.

Die auf die Kammzinkenreihen wirkenden elektrostatischen Kräfte bei angelegter elektrischer Spannung sind untenstehend und in den **Figuren 4a** bis **4e** beschrieben.

Die Federelementpaare **107** und **109** halten den Halter **19.2** und damit das Schaltteil **7.2**. In **Figur 3a** ist das Schaltteil **7.2** in einer in den Raum **5.2** herausgeschobenen Position dargestellt und in **Figur 3b** einer zurückgezogenen Position. In der herausgeschobenen Position erfolgt wie bereits oben beschrieben eine Strahlungsreflexion an den verspiegelten Seitenflächen **74a** und **74b** des Schaltteils **7.2.**

Der Strahlungsleiterschalter **20** hat ferner vier elektrische Kontaktflächen **111** bis **114.** Die Kontaktfläche **111** ist im Bereich **50a** über das eine Federelement des Federelementpaares **107** elektrisch mit dem Halter **19.2** und somit mit den an den Tragbälkchen **21.2a** und **21.2b** angeordneten Zinken **24.2b** bzw. **23.2a** verbunden. Es sei hier darauf hingewiesen, dass die an den Tragbälkchen **21.1a** und **21.1b** angeordneten Zinken **23a** und **23b** des Strahlungsleiterschalters **2** vom Raum **5.1** weggerichtet sind, während die am Tragbälkchen **21.2a** des Strahlungsleiterschalters **20** angeordneten Zinken **24.2b** zum Raum **5.2** hingerichtet und die am Tragbälkchen **21.2b** angeordneten Zinken **23.2a** von diesem weggerichtet sind.

Die Kontaktfläche **113** ist im Bereich **50b** über das andere Federelement des Federelementpaares **109** mit dem Halter **19.2** und damit mit den Zinken **23.2a** und **24.2b** verbunden. Über den Halter **19.2** sind die beiden Kontaktflächen **111** und **113** miteinander verbunden.

Die Kontaktfläche **112** ist elektrisch mit den ortsfesten Zinken **23.2b** verbunden. Die freien Enden dieser Zinken **23.2b** zeigen vom Raum **5.2** weg. Die Kontaktfläche **114** ist elektrisch mit den ortsfesten Zinken **24.2a** verbunden. Die freien Enden dieser Zinkenreihe **24.2a** zeigen zum Schaltteil **5.2** hin.

Im spannungslosen Zustand überlappen benachbarte Zinken **23.2b/24.2b** sowie **21.2b/24.2a** eine Kammstruktur **22.2a** bzw. **22.2b** je zur Hälfte. Das Schaltteil **7.2** befindet sich in einer Schaltzwischenlage. Werden entsprechende Spannungen angelegt, kann der Strahlungsleiterschalter **20** einmal in die in **Figur 3a** und einmal in die in **Figur 3b** gezeigte Stellung gebracht werden. Ist an der Kontaktfläche **114** die Spannung $+V_0$ angelegt und an die Kontaktfläche **112** $-V_0$ sowie an den Kontaktflächen **111** und **113** eine Erdung (0V), so ist der Schaltteil **7.2** sowohl in der in **Figur 3a** dargestellten Stellung wie auch in der in **Figur 3b** gezeigten Stellung lagestabil.

Um von der in **Figur 3a** dargestellten Stellung des Schaltteils **7.2** in die in **Figur 3b** gezeigte umzuschalten, wird die elektrische Spannung an der Kontaktfläche **114** um $\Delta V$ auf $+V_0 + \Delta V$ erhöht. Gleichzeitig wird die elektrische Spannung an der Kontaktfläche **112** um $\Delta V$ auf $-V_0 + \Delta V$ erhöht sowie zusätzlich an den Kontaktflächen **111** und **113** die Spannung $- \Delta V$ angelegt, wodurch ein Umschalten in die in **Figur 3b** gezeigte Stellung erfolgt. Ein Rückschalten erfolgt, wenn die eingangs erwähnten Spannungszustände wieder eingenommen werden.

Um zwischen den Strahlungsleiterenden eine möglichst verlustfreie Signalübertragung zu erreichen, sind die Kemenden der Strahlungsleiter **49** gemäß obiger Ausführung entsprechend ausgebildet und der Raum **5.1** (bzw. **5.2**) mit einer Index-Matching-Flüssigkeit gefüllt. Diese Flüssigkeit breitet sich jedoch vom zentralen Raum **5.1** kommend auch bis zu den Kammstrukturen **22.1a** und **22.1b** aus. Um trotz des Vorhandenseins der Flüssigkeit in den Kammstrukturen **22.1a** und **22.1b** kurze Schaltzeiten zu erreichen, sind deren Kammzinken in **Figur 4c** in vergrößert dargestellter Form ausgebildet. Die Kammzinken **24.1a** bzw. **24.1b** haben einen sich konisch verdickenden Teil **25,** der an einem dünnen Steg **26** als Zinkenfuß angeordnet ist Durch diese Ausgestaltung kann die Index-Matching-Flüssigkeit einfach aus dem engen Spalt verdrängt werden, wenn die beiden Kammzinkenanordnungen mit dem Zinken **23.1a** und **24.1a** bzw. **23.1b** und **24.1 b** gegeneinander bewegt werden. Der Reibungswiderstand in der Index-Matching-Flüssigkeit wird verringert, was zu einer kürzeren Schaltzeit führt.

Die hier gewählte Kammzinkenform hat jedoch noch einen anderen Vorteil. Die Bewegungsdistanz der beiden Kammzinkenanordnungen begrenzt sich von allein; es kann deshalb auf einen Anschlag, wie er zwingend in der WO98/12589 benötigt wird (gekennzeichnet dort durch die Bezugszeichen 36 und 38), verzichtet werden. Es entfällt somit auch eine Fehlerquelle, wie sie insbesondere infolge eines Haftenbleibens an den Anschlägen bei dem Schalter der WO98/12589 auftrat.

Die wirkende elektrostatische Kraft ist nämlich umgekehrt proportional zum Spalt zwischen den Kammzinken der beiden Kammzinkenanordnungen. Der Spalt vergrößert sich hier nämlich nach der Maximalverschiebung der Kammzinkenanordnung, wodurch die Kraftzunahme stark abfällt Kleine Schwankungen in der Schaltspannung haben dadurch kaum mehr einen Einfluss auf die Bewegungsdistanz.

Zur Verdeutlichung dieser Aussage sind in den **Figuren 4a, 4b, 4c, 4d** und **4e** die elektrostatischen Kräfte zwischen unterschiedlichen Kammzinkenanordnungen dargestellt. Jede Figur zeigt auf der rechten Seite die Kammzinkenanordnung und auf der linken Seite die Kraft F zwischen den beiden Zinkenanordnungen bei konstanter Gleichspannung über einem gegenseitigen Abstand **x** der Zinkenenden. Bei einem Abstand x=0 befinden sich die freien Zinkenenden der einen Kammzinkenanordnung auf einer Linie mit denjenigen der anderen Kammzinkenanordnung. Je weiter die Zinken ineinander greifen, desto größer wird x. x ist ein Abstandsmaß für das Ineinandergreifen der Zinken.

**Figur 4a** zeigt eine normale Kammzinkenanordnung, wobei die ortsfesten Zinken (Stege **27a**) identisch zu den beweglichen (Bälkchen **27b**) ausgebildet sind, wie sie beispielsweise in der WO98/12589 verwendet werden. Die auf die Zinkenanordnung **27a/b** wirkende Kraft $\mathbf{F_1}$ ist im links stehenden Kraftwegdiagramm **30.1** dargestellt. Die auf die Anordnung wirkende Kraft $\mathbf{F_1}$ ist erst Null, wenn die Zinkenenden einen gewissen Abstand $\mathbf{a_1}$ voneinander haben. Über einen großen Bereich $\mathbf{A_1}$ des Ineinanderschiebens der Zinken **27a** und **27b** beginnend bei einem Fluchten der gegenüber auf Lücke liegenden Zinkenenden [$x_1 = 0$] ist die auf die Kammstruktur mit den Zinken **27a** und **27b** wirkende Kraft $\mathbf{F_1}$ konstant. Sie steigt jedoch stark an [Bereich $D_1$], wenn sich die freien Zinkenenden dem jeweiligen gegenüberliegenden Verbindungsbalken **29a** bzw. **29b** für die Zinkenfüße nähern. Eine derartige Anordnung sollte mit einem mechanischen Anschlag betrieben werden, wie es ja auch die WO98/12589 macht.

**Figur 4b** zeigt eine Zinkenanordnung, bei der die beweglichen Zinken **31 b** analog zu den in **Figur 4a** gezeigten ausgebildet sind. Die ortsfesten Zinken **31a** haben jedoch in ihrem freien Zinkenendbereich eine im Querschnitt quaderförmige Stegverbreiterung **32.** Die auf die Zinkenanordnung **31a/b** wirkende Kraft $\mathbf{F_2}$ ist im links stehenden Kraftwegdiagramm **30.2** dargestellt. Die auf die Anordnung wirkende Kraft $\mathbf{F_2}$ ist ebenfalls Null, wenn die Zinkenenden einen gewissen Abstand $\mathbf{a_2}$ voneinander haben. So lange, bis die Stegverbreiterungen **32** vollständig zwischen den Zinken **31b** liegen, ist die Kraft $\mathbf{F_2}$ konstant [Bereich $\mathbf{A_2}$). Werden die Zinken **31a/b** dann weiter ineinander bewegt, ergibt sich durch den jetzt wirkenden schmalen Stegteil **33** eine Verringerung der Kraft $\mathbf{F_2}$ [Bereich $\mathbf{B_2}$]. An diesen abfallenden Bereich **B2** schließt dann ein konstanter Kraftbereich $\mathbf{C_2}$ an, der wenn sich auch hier die Zinkenenden dem gegenüberliegenden Zinkenfußverbindungssteg **29.1a** bzw. **29.2b** nähem, in eine rapide Kraftzunahme (Bereich $\mathbf{D_2}$) übergeht. Diese Zinkenanordnung benötigt keinen mechanischen Anschlag; eine Verdrängung der Index-Matching-Flüssigkeit aus den Zinkenzwischenräumen, wie bei der bevorzugten, unten genauer beschriebenen Ausführung ist jedoch nicht optimal.

**Figur 4c** zeigt eine Zinkenanordnung, wie sie bereits in **Figur 1** angedeutet wurde. Die Zinken **23a** bzw. **23b** der beweglichen Zinkenanordnung sind hier identisch mit denjenigen der **Figuren 4a** und **4b.** Die ortsfesten Zinken **24a** bzw. **24b** sind analog zu den Zinken **31a** ausgebildet; im freien Zinkenendbereich ist der Teil **32** zu einer Spitze

25 sich verjüngend ausgebildet. Der restliche Bereich **37** ist weiterhin in seinem Querschnitt quaderförmig. Da sich der Spalt zwischen den gleichbreiten Bälkchen **23a** bzw. **23b** und dem Stegteil **25** bei einem Gegeneinanderbewegen verringert, steigt die elektrostatische Anziehungskraft $\mathbf{F_3}$ gemäß Kurvenbereich **40.** Sind die sich verjüngenden Bereiche **25** zwischen die Zinken **23a** bzw. **23b** eingerückt, ist die Kraft $\mathbf{F_3}$ konstant (Kurvenbereich **41),** da jetzt keine Spaltbreitenänderung vorhanden ist. Erst wenn der dünne "Stegstengel" **26** in den Streubereich der freien Zinkenenden der Zinken **23a** bzw. **23b** kommt, ergibt sich eine Kraftabnahme (Kurvenbereich **42**). Ist auch der dünne Stegstengel **26** ohne "Randstörung" im Zwischenbereich der Zinken **23a** bzw. **23b,** ist die elektrostatische Kraft $\mathbf{F_3}$ wieder konstant (Kurvenbereich **43**). Auch diese Zinkenanordnung benötigt keinen mechanischen Anschlag, hat jedoch gegenüber der Zinkenanordnung in **Figur 4b** den Vorteil der kürzeren Schaltzeiten.

Weitere Ausgestaltungsmöglichkeiten für eine Zinkenanordnung mit einem dazugehörenden elektrostatischen Kraftwegdiagramm ist in Figur **4d** dargestellt. Diese Zinkenanordnung weist der in den **Figuren 3a** und **3b** dargestellte Strahlungsleiterschalter **20** auf. Im Gegensatz zu den Zinkenanordnungen in den **Figuren 4b** und **4c** sind hier die einander gegenüberliegenden Zinkenanordnungen identisch mit je einem im Querschnitt quaderförmigen Zinkenteil **34a** und **34b** auf einem dünnen Zinkenfuß **36** ausgebildet Das zu dieser Zinkenanordnung gehörende Kraftwegdiagramm verläuft mit einigen Ausnahmen analog zum Kraftwegdiagramm in **Figur 4c**. Ein Unterschied ergibt sich jedoch dadurch, dass ein konstanter Kraftbereich **A4,** wie in den **Figuren 4a** und **4b** wieder dann beginnt, wenn die einander auf Lücke gegenüberliegenden Zinkenenden auf gleicher Höhe sind. Gegenüber den Kraftwegdiagrammen der **Figuren 4b** und **4c,** erfolgt jedoch eine tieferer Einbruch eines zweiten konstanten Kraftbereichs $\mathbf{C_4}$, nachdem die Zinkenteile **34a** und **34b** sich aneinander vorbei bewegt haben, nahezu auf eine Kraft $\mathbf{F_4} \rightarrow 0$.

**Figur 4** zeigt eine weitere Variante einer Zinkenanordnung. Diese Zinkenanordnung weist zu den in **Figur 4b** dargestellten Zinken eine analoge Ausbildung mit dem Unterschied eines Querstegs **44.1** in den im Querschnitt quaderförmigen Zinken **44.2** auf. Dieser Quersteg **44.1** bewirkt gegenüber den anderen Zinkenanordnungen in den **Figuren 4a** bis **4d** eine hohe Anfangskraft, welche für den Beschleunigungsvorgang des in den **Figuren 1, 3a, 3b** und **9** gezeigten Halters äußerst nützlich ist.

Zur Herstellung des oben beschriebenen Strahlungsleiterschalters **2** bzw. **20** wird von einem in **Figur 5** dargestellten SOI-Wafer **39** ausgegangen. Der SOI-Wafer **39** besteht aus einem monokristallinen Silizium-Substrat **70**, auf dem eine amorphe Siliziumdioxid-Zwischenschicht $SiO_2$ **71** aufgebracht ist. Über der Siliziumdioxid-Schicht **71** ist eine Siliziumdeckschicht **73** angeordnet. Diese Siliziumdeckschicht **73** wird mit einer Maske **72** entsprechend der in den **Figuren 1** und **3a/b** in einer Draufsicht gezeigten Struktur zusätzlich mit einer unten beschriebenen Ausnahme maskiert Die Dicke der Deckschicht **73** wird entsprechend der in die Strahlungsleitereinschubkanäle **1.1a** bis **1.1d** bzw. **1.2a** bis **1.2b** einzuschiebenden Strahlungsleiter **49** ausgewählt. Sie beträgt beispielsweise bei der Verwendung von Monomode-Strahlungsleitern 75 µm. Das Substrat **70** und die Deckschicht **73** sind elektrisch leitend, während die Zwischenschicht **71** elektrisch isolierend ist.

Die oben erwähnte Ausnahme bei der Maskierung bezieht sich auf das Herausätzen des Schaltteils **7.1** bzw. **7.2,** sofern dieser als Spiegel für die Strahlung benachbarter Strahlungsleiter dienen soll. Die Schaltzustände des Strahlungsleiterschalters **2** bzw. **20** sind bei einem ersten Schaltzustand eine durchgehende Strahlung zwischen einander gegenüberliegenden Strahlungsleiterenden und beim zweiten Schaltzustand eine Strahlungsleitung durch Reflexion über jeweils eine verspiegelte Wand des Schaltteils **7.1** bzw. **7.2.** Um diese beiden Schaltzustände verwirklichen zu können, müssen

- die Strahlungsleiterenden in einer Ebene liegen,
- die einander gegenüberliegenden Strahlungsleiterendbereiche miteinander fluchten,
- die Achsen der Strahlungsleiterenden, welche im zweiten Schaltzustand signalmäßig miteinander verbunden sind, die spiegelnde Fläche des Schaltteils in einem einzigen Ort treffen und zur Senkrechten in diesem Ort konjugierte Winkel haben.

Diese Bedingungen müssen mit einer möglichst kleinen Toleranz erfüllt sein, um eine strahlungsverlustminimierte Schaltung zu erreichen. Aus den obigen Bedingungen ergibt sich ferner, dass die optischen Achsen der Endbereiche der Strahlungsleiter sich in dem Ort schneiden und jede spiegelnde Fläche in einer der Winkelhalbierenden der optischen Achse angeordnet ist. Ferner muss jede spiegelnde Fläche senkrecht auf der Ebene stehen in der die Strahlungsleiterenden angeordnet sind. Es hat sich nun gezeigt, dass, wurde das in der WO98/12589 beschriebene Ätzverfahren verwendet, die verspiegelten Flächen des Schaltteils von der Senkrechten abwichen und sich ihr gegenseitiger Abstand nach unten verringerte. Die Verringerung wurde dadurch erzeugt, dass beim Ätzen im Seitenwandbereich des Schaltteils ein verhältnismäßig großer mit Ätzionen gefüllter Raum vorhanden war.

Zur Herstellung des Strahlungsleiterschalters **2** bzw. **20** werden in einer Vakuumkammer nun die nicht maskierten Teile der Deckschicht **73** mit einem tiefen anisotropen reaktiven Ionenätzverfahren [deep anisotropic reaktive

ion etching] entfernt. Es wird bei einem Druck von 2,6 Pa, bei einer Temperatur von -95°C und einer Spannung von -70V (DC Bias) zwischen der Elektrode und dem SIO-Wafer gearbeitet. Es wird ferner eine Hochfrequenz von 13,5 MHz, ein Gasfluss von $SF_6$ mit 200cm$^3$/min, von $O_2$ mit 16 cm$^3$/min und von CHF mit 10 cm$^3$/min verwendet. Als Ionenquelle wird ein induktiv gekoppeltes Plasma benützt.

Dieser Materialabtragungsvorgang läuft so lange, bis das unmaskierte Deckschichtmaterial bis auf die Zwischenschicht **71** abgetragen ist, wie in **Figur 6** in einem Querschnitt dargestellt ist

Um das Entstehen von von der Senkrechten nicht abweichenden Seitenwänden **74a** und **74b** zu erreichen, ist jetzt je ein Opfersteg **75a** und **75b** in kleinem Abstand vor jeder Schaltteilseitenwand **74a** und **74b** angeordnet Die Opferstege **75a** und **75b** sind in den **Figuren 1, 5** und **6** erkennbar. Nach dem Herstellen des Schaltteils **7.1** mit nun exakt vertikalen Seitenwänden **74a** und **74b** werden die Opferstege **75a** und **75b** entfernt. Das Entfernen kann gemäß dem unten beschriebenen Verfahren durch Unterätzen der Zwischenschicht **71** mit Flusssäure erfolgen, womit jene ihren Halt verlieren und herausfallen, oder durch Unterätzen direkt in der unten erwähnten Plasmaätzanlage, indem die Ätzparameter so verändert werden, dass ein Ätzen entlang der Zwischenschicht **71** erreicht wird. Eine dritte Möglichkeit, die Opferstege **75a** und **75b** zu entfernen besteht darin, diese so dünn auszubilden, dass sie bei dem nachfolgenden Oxidationsschritt (zur Verminderung der Rauhigkeit) in Siliziumoxid umgewandelt werden und dann beim teilweisen Unterätzen der Zwischenschicht **71** in der Flusssäure auch aufgelöst werden.

In einem nächsten Verfahrensschritt werden nun mit 48-prozentiger Flusssäure bei Raumtemperatur die Zwischenschichtbereiche **71** unterhalb der in **Figur 6** gezeigten dünnen Stege **77** unterätzt, bis diese freischwebend sind. Die Zwischenschichtbereiche **71** unterhalb der breiten Stege **79** werden lediglich kehlenförmig angeätzt. Die breiten Stege **79** bleiben aber stehen, wie in **Figur 7** gezeigt ist

Die dünnen Stege **77** sind dann die in den **Figuren 1** und **3a/b** dargestellten filigranen Teile. Da der Schaltteil (Spiegel) **7.1** bzw. **7.2,** der Halter **19.1** bzw. **19.2,** die Tragbälkchen **21.1a** und **21.1b** bzw. **21.2a** und **21.2b,** die fedemden Laschen **16** und die Federelements **51a/b** und **52a/b** bzw. **107** und **109** sowie deren Stege **57** lediglich aus Elementen mit dünnen Breiten, sofern nach mechanischen Anforderungen notwendig, als filigrane Gebilde aufgebaut sind, werden sie "freigeätzt". Analoges erfolgt mit den Kammstrukturen.

Nach der Herstellung der gesamten Struktur können die Seitenwände **74a** und **74b** des Schaltteils **7.1** bzw. **7.2** mit einer optischen Reflexionsbeschichtung bedampft werden.

Anschließend werden die vier Strahlungsleiter **49** in die entsprechenden Strahlungsleitereinschubkanäle **1.1a** bis **1.1d** bzw. **1.2a** bis **1.2d** eingeschoben. Das Einschieben erfolgt unter dem Mikroskop.

Nachdem die Strahlungsleiter in die entsprechenden Strahlungsleitereinschubkanäle eingeschoben sind, werden diese im Randbereich der Schalteranordnung mit einer Deckplatte verklebt Damit der Kleber niemals, auch bei unvorsichtiger Handhabung, bis zu den filigranen Teilen vordringen kann, sind die Strahlungsleitereinschubkanäle **1a** bis **1d** mit Kleberaufnahmekanälen **90** verbunden, welche überschüssigen Kleber aufnehmen können.

Anstatt die Schaltteile **7, 7.1, 7.2** und **101** derart auszubilden, dass eine Strahlung zwischen jeweils zwei Leiterenden vollständig übermittelt oder vollständig abgeblockt wird, kann auch nur eine teilweise Abblockung vorgesehen werden. Ein derartiges Element dient dann zur definierten Dämpfung einer Signalstrahlung. Um dieses Ziel zu erreichen, könnte man nun auf die Idee kommen, einen Spiegel nur teilweise in einen strahlungsführenden Raum **150** zwischen jeweils zwei Leiterenden **151a** und **151b** einzuführen. Es hat sich jedoch gezeigt, dass hierdurch eine Dämpfung zwar möglich ist, jedoch ergibt sich hierbei eine starke Polarisationsabhängigkeit. D.h. eine Dämpfung der TE- (transelektrischen) und der TM (transmagnetischen)-Welle ist unterschiedlich. Zur Reduktion der Polarisationsabhängigkeit wird hier **(Figur 12** bzw. **13)** der Schaltteil **152** mit einer dämpfenden metallischen Beschichtung versehen. Die Reflexions- und Dämpfungseigenschaften einer derartigen Beschichtung lassen sich z. B. gemäß Bom und Wolf, "Principles of Optics", "An absorbing film on a transparent substrate", Seite 628 ff., Pergamon Press, 1975, berechnen.

Die Polarisationsabhängigkeit zwischen den beiden Wellentypen - TE- und TM-Welle - rührt daher, dass bei einer Diffraktionsanordnung die Randbedingungen an der metallisierten freien Kante des Schaltteils **152** unterschiedlich sein können. Die Polarisationsabhängigkeit kann nun verringert werden, wenn das Schaltteil **152** nicht mehr nur geringfügig von der Senkrechten zur fluchtenden Achse **153** der beiden Leiterenden **151a** und **151b** angeordnet wird, sondern in einem Winkel kleiner als 65°. Sehr gute Ergebnisse wurde bei einer Neigung kleiner als 50° bevorzugt mit 45° erzielt.

Einen nur geringfügig von der Senkrechten abweichenden Winkel hatte man früher gewählt, damit keine Strahlung in einen der Leiterenden **151 a** bzw. **151b** rückreflektiert werden konnte. Ansonsten war man jedoch bestrebt eine möglichst senkrechte Anordnung zu erreichen. Die hier vorgeschlagene starke Neigung (kleiner Winkel) war dem Stand der Technik fremd.

Durch den gegenüber dem Stand der Technik verringerten Winkel zwischen der Oberfläche des Schaltteiles **152** und der Achse **153** muss der Spalt **154** zwischen den Leiterenden **151a** und **151b** vergrößert werden, was zu höheren Strahlungsverlusten zwischen den beiden Enden **151a** und **151b** führen könnte. Diese Verluste sind in **Figur 12** bzw. **13** durch ein sich öffnendes Strahlenprofil **150,** welches nicht mehr vollständig vom Leiterkem **155** aufgenommen wird, dargestellt. Durch ein Abknicken des Dämpfungsteils **157** in einem Knickpunkt **156** des Schaltteils **152** kann

diese Abstandserhöhung jedoch in Grenzen gehalten werden.

Je nach vorgegebener Grunddämpfung kann hier der Spalt **154** mit einer Indexmatching-Flüssigkeit gefüllt werden oder auch auf diese verzichtet werden. Eine vorgegebene Dämpfung kann nun zwischen einen hohen und tiefen Wert durch zwei feste Endpositionen des Dämpfungsteils **157** innerhalb bzw. ausserhalb des strahlungsführenden Raums **150** eingestellt werden. Es können aber auch Zwischenstellungen eingenommen werden.

In **Figur 8** ist vereinfacht eine Strahlungsleiterschalteranordnung **4** mit nur einem einzigen Strahlungsleiterschalter **80,** der analog zum Strahlungsleiterschalter **2** bzw. **20** ausgebildet sein kann, dargestellt. Auch sind der Einfachheit halber nur zwei Strahlungsleiter **81a** und **81b** dargestellt Die Anordnung **4** ist auf einem Sockel **82** angeordnet und mit einem Deckel **83,** der mit dem Sockel **82** fluiddicht verbunden ist, überdeckt. Für die Strahlungsleiter **81 a** und **81 b** hat der Deckel **83** fluiddichte Durchführungen **85.** Der Innenraum **86** der Strahlungsleiterschalteranordnung **4** ist mit einer Index-Matching-Flüssigkeit **87** gemäß den obigen Ausführungen zur Erreichung eines kollimierten Strahles ausgefüllt. Ferner ist im Innenraum **86** eine Gasblase **88** vorhanden, deren Volumen derart vorgegeben ist, dass ein Druck im Gehäuseinnenraum **86** infolge thermischer Ausdehnung der Index-Matching-Flüssigkeit **87** sowie der Gehäusewandungen **82** und **83** einen vorgegebenen Wert nicht über- bzw. unterschreitet

Anstelle nur eines einzigen Strahlungsleiterschalters **2** bzw. **100** können auch mehrere in einer Strahlungsleiterschalteranordnung verwendet werden. Eine derartige matrixartige Anordnung **120** für m "ankommende" und n "abgehende" Strahlungsleiter **121a** bis **121 d** und **122a** bis **122d** hat m · n, hier sechzehn Strahlungsleiterschalter **100aa** bis **100dd.** Mit den sechzehn Strahlungsleiterschaltern **100aa** bis **100dd** ist ein Signalfluss zwischen den Strahlungsleitem **121a** bis **121d** und **122a** bis **122d** schaltbar. Eine derartige Anordnung **120** ist in den **Figuren 9** und **10** dargestellt, wobei hier die Schaltteile **101aa - 101dd** ebenfalls verspiegelt sind. Zur Ansteuerung der matrixartig angeordneten Strahlungsleiterschalter **100aa** bis **100dd** sind 2m + n bzw. m + 2n, hier zwölf elektrische Ansteueranschlüsse **123a** bis **123d**, **124a** bis **124d** und **125a** bis **125d** vorhanden.

Bei der Strahlungsleiterschaltungsanordnung **120** sind die matrixartig angeordneten Strahlungsleiterschalter **100aa** bis **100dd** für ihre elektrische Ansteuerung und die optischen Verbindungen in einem Schalterchip **127** (siehe **Figur 9**) mit einem in Flip-Chip-Technik aufgebrachten Leiterchip **129** (siehe **Figur 10**) miteinander verbunden.

Auf den Schalterchip **127** sind sechzehn Strahlungsleiterschalter **100** analog zu den in den **Figuren 3a** und **3b** dargestellten aufgebracht. Um die **Figur 9** nicht zu überladen, sind bei den einzelnen Strahlungsleiterschaltern **100aa** bis **100dd** nur deren Kontaktflächen **111** bis **114** sowie der Halter **103** mit dem verspiegelten Schaltteil **101** dargestellt. Ferner hat der Schalterchip **127** je vier Alignierkanäle **131** zum Einbringen der "ankommenden" und "abgehenden" Strahlungsleiter **121a** bis **121d** und **122a** bis **122d.** Der Schalterchip **127** hat zur elektrischen Ansteuerung der Strahlungsleiterschalter **100aa** bis **100dd** an einer Alignierkanäle freien Seite vier Bonding-Pad-Paare **123a/124a** bis **123d/124d** und an der anderen Alignierkanäle freien Seite vier Bonding-Pads **125a** bis **125d.** Auf diesen Pads sind Drähte gebondet, welche zum Gehäuse führen.

Der in **Figur 10** dargestellte Leiterchip **129** hat mehrere miteinander fluchtende, in einer Ebene angeordnete, integrierte Wellenleiterteilstücke **133aa** bis **133dd** und **134aa** bis **134dd,** welche jeweils durch Freiraumstrecken **135aa** bis **135dd** unterbrochen sind. Jeweils vier Wellenleiterteilstücke **133aa - 133dd** fluchten mit den Alignierkanälen **131** für die Strahlungsleiter **121a** bis **121 d.** Die jeweils vier Wellenleiterteilstücke **134aa** bis **134dd** fluchten mit den Alignierkanälen der Strahlungsleiter **122a** bis **122d.** Die Freiraumstrecken **135aa** bis **135dd** sind jeweils im Bereich der Schaltteile **101 aa** bis **101 dd** der Strahlungsleiterschalter **100aa** bis **100dd** vorhanden. Passend zu den jeweiligen Kontaktflächen **111** bis **114** sind auf dem Leiterchip **129** Kontaktfelder **143aa** bis **143dd** mit den Kontaktflächen **139** bis **142** vorhanden. Diese Kontaktflächen sind als lötbare Kontakte (Solder Bumps) ausgebildet und können mit dem Schalterchip in Flip-Chip-Technik verlötet werden.Sämtliche Kontaktflächen **140** und **142** der Kontaktfelder **143(a-d) a, 143(a-d)b, 143(a-d)c** und **143(a-d)d** (vertikale Richtung in **Figur 10**) sind miteinander und mit jeweils einem Anschluss **124a-d** bzw. **123a-d** verbunden. Jeweils eine Kontaktfläche **141** ist mit einer Kontaktfläche **139** eines benachbarten Kontaktfeldes einer Zeile verbunden. Die in **Figur 10** jeweils der rechten Seite des Leiterchips benachbarte Kontaktfläche **139** ist mit einem zum elektrischen Anschluss **125a** bis **125d** gehörenden Anschluss verbunden. Die Kontaktflächen **139** und **142** jeweils eines Kontaktfeldes **139aa** bis **139dd** sind durch die auf ihnen liegenden Kontaktflächen **111** und **113** der Strahlungsleiterschalter **100aa** bis **100dd** über das jeweilige Federelement **109** elektrisch miteinander verbunden. **Figur 11** zeigt schematisch im Querschnitt, wie beispielsweise der Strahlungsleiter **121a,** der Schalterchip **127** und der Leiterchip **129** zusammengebaut sind. Eine elektrische Verbindung zwischen den jeweiligen Kontaktfeldern **111** und **113** der Schaltteile **101aa** bis **101dd** erfolgt über das jeweilige Federelementpaar **107** und den Halter **19.2.**

Um z.B. den zweiten verspiegelten Schaltteil **101ab** in der ersten Reihe in **Figur 10** in den zentralen Raum **5** der Freiraumstrecke **135ab** zwischen den Wellenleiterteilstücken **133ab** und **134ab** einzubringen, wird an den Anschluss **124b** die Spannung $+V_0$ und an den Anschluss **125a** die Spannung $-V_0$ gelegt. Nur am Strahlungsleiterschalter **100ab** liegt nun eine Spannung von $2V_0$, welche im Stande ist, die bistabile Aufhängung umzuschalten. An den anderen Strahlungsleiterschaltem **100aa, 100ac** und **100ad** der ersten Reihe bzw. denjenigen **100bb, 100cb** und **100db** der zweiten Kolonne liegt nur die einfache Spannung $V_0$, welche nicht für eine Umschaltung ausreicht. Die beiden Strahlungsleiter **121a** und **122b** sind somit "durchgeschaltet". **Figur 9** zeigt zudem noch Durchschaltungen der Leiter **121b** und **122c**, der Leiter **121c** und **122a** sowie der Leiter **121d** und **122d.**

Analog zu der oben angeführten matrixartigen Anordnung mehrerer Strahlungsleiterschalter können auch mehrere Dämpfungseinheiten zusammen angeordnet werden. Die Dämpfungseinheiten können nun auch linear als sogenanntes Array zusammengefasst wenten. Auch können Dämpfungseinheiten zusammen mit Strahlungsleiterschaltern in einem Chip angeordnet werden. Die Herstellung wird man ebenfalls mittels Photolithographie und Ätztechnik vornehmen. Der Abstand zwischen den einzelnen Dämpfungseinheiten sollte jedochdem Standardabstand zwischen den oben beschriebenen Strahlungsleiterschaltern entsprechen.

Bel Bandfasern (fibre ribbon) werden mehrere Strahlungsleiter zusammengefasst und in einem Abstand von 250 µm verklebt. Zwischen den einzeinen Fasern, welche einen Standardabstand von 125 µm haben, verbleibt somit ein Abstand von ebenfalls 125 µm. Dieser Abstand ist ausreichend für einen "elektrostatischen Motor" zur Bewegung des Schaltteils **152**. Dieser "elektrostatische Motor" ist analog zu demjenigen der Strahlungsteiterschalter ausgebildet, wie er in den **Figuren 1, 3a** und **3b** dargestellt ist. Um diesen "elektrostatischen Motor" elektrisch anzuschliessen, muss ein entsprechendes Drahtbonden durchgeführt werden. Hierzu wird eine zweite Leiterplatte unter dem Siliziumsubstrat (z.B. unter den Siliziumsubstrat **70)** angeordnet, welches Bondflächen aufweist. Die Anordnung wird nun derart gewählt, dass hier die Bonddrähte im Zwischenraum zwischen den Strahlungsleitern verlaufen.

Eine arrayartige Anordnung von hier beispielsweise vier Dämpfungseinhelten ist in **Figur 14** dargestellt. Jeweils ein Federteil **161a** bis **161d** ist hier getrennt von jeweils einem "elektrostatischen Antreib **162a** bis **162d** angeordnet Hierdurch lassen sich sehr schmale Dämpfungseinheiten herstellen, welche zwischen den Kanälen **163a** bis **163e** für die einzelnen Strahlungsleiter Platz finden.

Anstelle nur eines einzigen Schaltteils **7, 7.1, 7.2, 101aa** bis **101dd** bzw. **152** können auch, wie in **Figur 15** gezeigt, mehrere Schaltteile **165a** bis **165d** in einem einzigen Strahlungsleiterschalter **166** angeordnet werden. Auch hier liegen die Enden **170a** bis **170f** Strahlungsleiter **169a** bis **169f** in einer Ebene strahlenförmig. Der Einfachheit halber sind die Schaltteile **165a** bis **165d** hier lediglich mit einem Halterstückchen **166a** bis **166d** gezeigt; die ganze elektrostatische Bewegungseinrichtung, welche bereits oben beschrieben worden ist, ist nicht dargestellt. Die Schaltteile **165a** bis **165d** sind an ihrer nicht schraffierten Seite für die in die Strahlungsleiter **169a** bis **169f** überzukoppelnde Strahlung verspiegelt. Der Strahlungsleiterschalter **166** ist nun derart aufgebaut, dass Strahlung von den Strahlungsleitern **169a** bis **169c** und **169e** sowie **169f** mit jeweils einem der Schaltteile **165a** bis **165d** in den Strahlungsleiter **169d** einleitbar ist, sofern ein entsprechender Schaltteil der Schaltteile **165a** bis **165d,** hier beispielsweise der Schaltteil **165a**, in den zentralen Raum **171** eingeschoben ist.

Ist z.B. wie in **Figur 15** dargestellt, der Schaltteil **165a** eingeschoben, so wird aus dem Strahlungsleiter **169c** austretende Strahlung auf der verspiegelten Fläche diese Schaltteils **169a** reflektiert und in den Kem des Strahlungsleiters **169d** eingekoppelt. Aus den restlichen Strahlungsleiteren **169a, 169b, 169e** und **169f** austretende Strahlung kann nicht in den Strahlungsleiter **169d** eingekoppelt werden. Um eine ausreichende Entkopplung der Ausgangsstrahlung der anderen Strahlungsleiter zu erreichen, sollte deren Strahlung, sofern sie auf die reflektierende Oberfläche einer der eingeschobenen Schaltteil fallen kann, unter einem Winkel zur Kernachse fallen der größer ist als 12 °. In dem hier gezeigten Beispiel fällt auf die spiegelnde Oberfläche des Schaltteils **165a** auch Strahlung aus dem Strahlungsleiter **169b.** Nach der Reflexion sollte die Strahlung aus dem Leiter **169b** dann unter einem Winkel größer 12 ° zur Kemachse des Strahlungsleiters **169e** (und natürlich auch zur Kemachse des Strahlungsleiters **169d)** einfallen und wird dann nicht mehr in diesen eingekoppelt.

Zur Ermittlung eines optimalen Winkels wird auf die Veröffentlichung von C.M. Miller, C. Mettler, A. White in Optical Fiber Splices and Connectors, Theory and Methods, New York; Marcel Dekker Inc., 1986, Kap. 4 hingewiesen. Hier wird eine Methode zur Berechnung von Kopplungsverlusten zwischen zwei gegeneinander verkippten und versetzten Fasern angegeben. Diese Theorie wird in einer Abwandlung auf die in **Figur 15** gezeigte Faserendenanordnung angewandt.

Die Lage des betreffenden Schaltteils **165a** bis **165d** wird nun derart gewählt, dass im geschalteten Zustand für die beiden "geschalteten" Strahlungsleiterenden eine optimale Einkopplung und für die anderen Strahlungsleiterenden wenigstens ein Kopplungsverlust von 50 dB erreicht wird.

Eine Abschätzung des Kopplungsverlusts Γ in dB kann mit der untenstehenden Formel erfolgen, wobei **Figur 16** hierzu erklärend ist. **Figur 16** zeigt zwei um einen Winkel Θ gegeneinander verkippte und um einen Wert **r** gegeneinander versetzte strahlungsleitende Kerne **173** und **174** von Leiterenden in einem gegenseitigen Abstand **z**. Die Kopplungsverluste Γ ergeben sich zu

$$\Gamma = -10\log\left(\frac{16n_{co}^2 \cdot n_0^2}{(n_{co}+n_0)^4} \cdot \frac{1}{q}\exp\left\{\frac{p \cdot u}{q}\right\}\right)$$

In der obigen Formel bedeuten $n_{co}$ und $n_0$ der Brechungsindex jedes Strahlungsleiterkems bzw. des Materials im Raum zwischen den Leiterenden, also in der Regel unserer Index-Matching-Flüssigkeit.

$$q = G^2 + 1,$$

wobei

$$G = z/k \cdot w^2$$

ist z ist gemäß **Figur 16** der Abstand der betreffenden Leiterenden. w ist der Radius des freien Strahles zwischen den Leiterenden, bei dem die Strahlungsleistung auf den 1/e-Teil des Maximums abgefallen ist.

$$k = 2\pi n_0/\lambda,$$

wobei $\lambda$ die Wellenlänge der Strahlung im Vakuum ist.

$$p = k \cdot w^2/2$$

$$u = F^2 + 2F \cdot G(\sin\ominus) + (G^2 + 1/2)\sin^2\ominus,$$

wobei $\ominus$ der Verkippungswinkel zwischen den beiden Leiterenden ist. Da jedoch in der in **Figur 15** gezeigten Anordnung Spiegel **165a** bis.**165d** zwischengeschaltet werden, ist $\ominus$ ein Winkelwert ohne Spiegelungswert (Korrektur durch zweimalige Addition des Reflexionswinkels am betreffenden Spiegel).

$$F = r/k \cdot w^2,$$

Werden typische Werte in diese Formel eingesetzt, so ergibt sich eine Kopplungsdämpfung $\Gamma$ von über 55dB bei einem Wellenlängenbereich von 1250 nm und 1630 nm und einem Verkippungswinkel von 12°. D.h. die Kemachse von Strahlungsleiterenden, in die keine Strahlung mehr eingekoppelt werden soll, sollte vorzugsweise einen Verkippungswinkel $\ominus$ von mindestens 12° haben.

Ist der Schaltteil **165a** herausgezogen und der Schaltteil **165b** eingeschoben, erfolgt eine Überkopplung von Strahlung vom Strahlungsleiter **169b** zum Strahlungsleiter **169d.** Schaltteil **165d** bewirkt eine Kopplung vom Strahlungsleiter **169e** zum Strahlungsleiter **169d** und Schaltteil **165c** vom Strahlungsleiter **169f** zum Strahlungsleiter **169d.** Sind alle Schaltteile **165a** bis **165d** herausgezogen, ist eine Strahlungskopplung vom Strahlungsleiter **169a** zum Strahlungsleiter **169d** möglich.

Statt die Strahlung von den Strahlungsleitem **169a, 169b, 169c, 169e** und **169f** in nur einen Strahlungsleiter **169d** mit den entsprechenden Schaltteilen **165a** bis **165d** einzukoppeln, kann auch Strahlung aus dem Strahlungsleiter **169d** mit genau dieser Anordnung einzeln in die Strahlungsleiter **169a, 169b, 169c, 169e** und **169f** eingekoppelt werden.

Je zwei Schaltteile **165a** und **165b** sowie **165c** und **165d** sind beidseits des Strahlungsleiters **169a,** der mit dem Strahlungsleiter **169d** fluchtet angeordnet. Die Strahlungsleiter **169b** bis **169f** sind eng benachbart angeordnet Die Schaltteile **165a** bis **165d** könnten auch einzeln zwischen jeweils zwei benachbarten Strahlungsleitern angeordnet werden, wobei dann nicht unbedingt die Strahlung von bzw. zu diesen Strahlungsleitem geschaltet würde. Die in **Figur 15** gezeigte Darstellung weist jedoch gegenüber der gerade skizzierten einen geringeren Platzbedarf auf, wodurch

pro Raumeinheit mehr Strahlungsleiter schaltbar sind. Neben der hier gezeigten Anordnung und der Anzahl Strahlungsleiter sind auch andere Konfigurationen möglich.

Auch bei der hier gerade skizzierten Anordnungen wird man vorzugsweise den zentralen Raum **171** mit einer Index-Matching-Flüssigkeit füllen, muss es aber nicht (schlechtere Ausführungsform).

Wie oben ausgeführt, kann man nun in Bezug auf jeweils zwei Strahlungsleiterenden die reflektierende Oberfläche eines Schaltteils derart anordnen, dass die Strahlung zwischen diesen beiden Strahlungsleitem überkoppelbar ist Man kann aber weitere Strahlungsleiterenden auch derart anordnen, dass beispielsweise noch zwei weitere Strahlungsleiterenden mit ein- und demselben Schaltteil miteinander verkoppelbar sind.

**Patentansprüche**

1. Strahlungsleiterschalteranordnung **(4,120)** mit wenigstens einem Strahlungsleiterschalter **(2, 100, 100aa - 100dd, 166)**, hergestellt aus einem Sandwich-Wafer **(39)** mit einem Substrat **(70),** einer Deckschicht **(73)**, und einer elektrisch isolierenden Zwischenschicht (**71**), wobei jeder Strahlungsleiterschalter **(2, 100, 100aa - 100dd; 166)** wenigstens einen verschiebbaren Schaltteil **(7, 101, 101aa - 101dd; 152**; **165a-d)** sowie wenigstens zwei in einer Ebene zu liegen kommende Strahlungsleiterenden **(6, 133aa - 133dd, 134aa- 134dd; 170a-f)** hat, welche derart nah benachbart zueinander angeordnet sind, dass mit dem Schaltteil **(7.1, 7.2, 101, 101aa -101dd; 165a-d)** aus einem Strahlungsleiterende **(6, 133aa - 133dd, 134aa-134dd; 151a, 151b; 170a-f)** austretende Strahlung auf ihrem optischen Weg zu einem anderen Leiterende **(6, 133aa - 133dd, 134aa- 134dd; 151a, 151b; 170a-f)** abblockbar bzw. in dieses reflektierbar ist, wobei der den Schaltteil **(7, 101, 101aa-101dd; 152; 165a-d)** aufnehmende Zwischenraum **(5, 135aa - 135dd; 154; 171)** zwischen den Leiterenden **(6, 133aa - 133dd, 134aa- 134dd; 151a, 151b; 170a-f)** mit einer einen vorgegebenen Brechungsindex aufweisenden Index-Matching-Flüssigkeit gefüllt ist, wobei der strahlungsführende Kern **(8)** jedes Strahlungsleiters **(49; 169a-f)** am Leiterende über die Faserstirnfläche hervorsteht und der hervorstehende Bereich derart verjüngend ausgebildet ist, dass in Zusammenwirkung mit dem Brechungsindex der Index- Matching-Flüssigkeit und dem freien Kernprofil **(13)** im mit Flüssigkeit gefüllten Raum **(5, 135aa - 135dd; 154; 171)** eine Strahlungskollimation **(14)** erreichbar ist.

2. Anordnung **(4,120)** nach Anspruch 1, bei der der Brechungsindex der Index-Matching-Flüssigkeit höchstens gleich groß wie der Brechungsindex jedes Strahlungsleiterkerns **(8)** und bevorzugt der Brechungsindex der Flüssigkeit zwischen 99,90% und 98,00% bezogen auf den Kembrechungsindex ist, bevorzugt jedoch zwischen 99,4% und 98,6% gewählt wird.

3. Anordnung **(4, 120)** nach Anspruch 1 oder 2 mit wenigstens einem Strahlungsleiterschalter **(2, 100, 100aa - 100dd; 166)**, der einen Halter **(19, 103; 166a-d)** zum Halten des zwischen den Strahlungsleiterenden **(6, 133aa - 133dd, 134aa-134dd; 170a-f)** verschiebbaren Schaltteils **(7, 101, 101aa - 101dd; 165a-d)** hat, jeder Halter **(19, 103; 166a-d)** wenigstens eine mit ihm verbundene erste Kammstruktur **(23a, 23b; 115, 116)** aufweist, eine zur ersten Kammstruktur **(23a, 23b)** passende zweite, ortsfeste Kammstruktur (**24a, 24b; 117, 119**) vorhanden ist, deren Kammzinken **(24a, 24b)** auf Lücke zur ersten Struktur **(35)** angeordnet sind und an beide Kammstrukturen **(23a, 23b, 24a, 24b; 115, 116, 117, 119)** eine erste und eine zweite elektrische Spannung zur Erzeugung einer elektrostatischen Verschiebekraft anlegbar ist, wobei jeder Zinken wenigstens einer der Kammstrukturen **(23a, 23b, 24a, 24b)** in seinem freien Zinkenendbereich eine Querschnittsverbreiterung aufweist, um die betreffende Kammstruktur mit einer elektrostatischen Spannungsbelegung und damit den Schaltteil **(7.2, 101, 101aa - 101dd; 165a-d)** in einer stabilen Lage zu halten.

4. Anordnung nach Anspruch 3, mit wenigstens ein mit dem Halter **(19; 103)** fest verbundenes Blattfederelement **(51a, 51b, 52a, 52b; 107, 109),** an dem bevorzugt jeweils die erste Kammstruktur **(23a, 23b)** angeordnet ist, und insbesondere jedes Blattfederelement **(51a, 51b, 52a, 52b)** annähernd senkrecht zur Bewegungsrichtung des Halters **(19)** verlaufend ausgebildet ist.

5. Anordnung (4, 120) nach einem der Ansprüche 1 bis 4, bei der jedes Schaltteil **(7, 101, 101aa - 101dd; 165a-d)** wenigstens eine für die Strahlung des Strahlungsleiters als Spiegel wirkende Oberfläche **(74a, 74b)** hat.

6. Anordnung insbesondere nach einem der Ansprüche 1 bis 5, bei der der Schaltteil **(152)** derart in einen strahlungsführenden Raum **(150)** im Zwischenraum **(154)** zwischen jeweils zwei Leiterenden **(151a, 151b)** einschiebbar ist, dass eine vorgegebene Dämpfung der Strahlung erfolgt, insbesondere der in den strahlungsführenden Raum **(154)** einschiebbare Dämpfungsteil **(157)** des Schaltteils **(152)** mit einer Metallbeschichtung vesehen ist und vorzugsweise der Winkel des Dämpfungsteils **(157)** zur fluchtenden Achse **(153)** der beiden Leiterenden **(151a, 151b)**

einen Winkel kleiner als 65° vorzugsweise kleiner als 50° hat, um eine polarisationsabhängige Dämpfung durch den eingeschobenen Dämpfungsteil zu verringern.

**7.** Anordnung nach einem der Ansprüche 1 bis 6, mit mehrere Schaltteile **(165a-d)** in einem Strahlungsleiterschalter **(166),** wobei jedes Schaltteil **(165a-d)** derart vor jeweils zwei Strahlungsleiterenden **(170c/170d; 170b/170d; 170e/170d; 170f/170d)** zweier Strahlungsleiter **(169c/169d; 169b/169d; 169e/169d; 169f/169d)** schiebbar ist, dass eine Strahlungsüberkopplung bzw. - dämpfung möglich ist und vorzugsweise die Schaltteile **(165a-d)** den Strahlungsleiterenden **(170a-d)** derart zugeordnet sind, dass Ausgangsstrahlungen von mehreren Strahlungsleiterenden **(170a, 170b, 170c, 170e, 170f)** jeweils einzeln je nach Schaltstellung eines der Schaltteile (**156a-d**) in ein einziges Strahlungsleiterende **(170d)** bzw. insbesondere die Ausgangsstrahlung aus einem einzigen Strahlungsleiterende jeweils einzeln je nach Schaltstellung eines der Schaltteile in eines der anderen Strahlungsleiterenden einkoppelbar ist.

**8.** Anordnung **(4, 120)** nach einem der Ansprüche 1 bis 7, mit ein fluiddichtes Gehäuse mit fluiddichten Durchführungen für die Strahlungsleiter und die elektrischen Leitungen, wobei der Gehäuseinnenraum **(86)** bis auf eine Gasblase **(88)** mit der Index-Matching-Flüssigkeit gefüllt ist und das Volumen der Gasblase **(88)** derart vorgegeben ist, dass ein Druck im Gehäuseinnenraum **(86)** infolge thermischer Effekte einen vorgegebenen Wert nicht über- bzw. unterschreitet.

**9.** Anordnung **(120)** nach einem der Ansprüche 1 bis 8, mit mehrere in einer Ebene matrizenartig, bevorzugt auf einem ersten Chip angeordnete Schalter **(100aa - 100dd),** wobei dieser Chip insbesondere integrierte elektrische Leiterteilstücke für an die Schalter **(100aa - 100dd)** anzulegende elektrische Spannungen hat, und für die optischen und bevorzugt die elektrischen Verbindungen zwischen den Schaltern ein zweiter, als Wellenleiterchip ausgebildeter, bevorzugt in Flip-Chip-Technik aufgebrachter Chip vorhanden ist.

**10.** Verfahren zur Herstellung der Strahlungsleiterschalteranordnung **(4, 120)** mit wenigstens einem einen Schaltteil **(7, 101, 101aa - 101dd; 165a-d)** aufweisenden Strahlungsleiterschalter **(2, 100, 100aa - 100dd; 166),** wobei das Schaltteil **(7.1, 7.2, 101,** 101 **aa - 101**dd; **165a-d)** vor wenigstens zwei in einer Ebene liegenden Strahlungsleiterenden **(6, 133aa - 133dd**, **134aa- 134dd; 170a-f)** verschiebbar ist, nach einem der Ansprüche 1 bis 9, hergestellt aus einem Sandwich-Wafer **(39),** der ein Substrat **(70),** eine Deckschicht **(73)** und eine elektrisch isolierende Zwischenschicht **(71)** hat, wobei aus dem Sandwich-Wafer **(70)** die Strahlungsleiterschalteranordnung **(4; 120)** u.a. mit dem Schaltteil **(7, 101, 101aa - 101dd; 165a-d)** und den Führungskanälen **(1.1a - 1.1d; 1.2a -1.2d, 131)** für die Strahlungsleiter **(49; 121a -121d, 122a -122d; 169a-f)** bzw. deren Enden **(6; 133aa -133dd, 134aa -134dd; 170a-f)** durch einen Ätzvorgang erzeugt wird, bei dem in unmittelbarer Nähe der jeweils senkrecht zur Ebene verlaufenden Außenseiten **(74a, 74b)** des Schaltteils **(7, 101, 101aa - 101dd; 165a-d)** jeweils wenigstens ein Opfersteg (**75a, 75b)** erzeugt wird, um einen von der Senkrechten zur Ebene abweichenden Verlauf der Außenseiten **(74a, 74b)** zu vermeiden.

**11.** Verfahren nach Anspruch 10, bei den der Sandwich-Wafer **(39)** eine im wesentlichen aus Silizium bestehende Deckschicht **(73)** hat, deren nicht maskierte Bereiche in einem Ionenätzverfahren entfernt werden, wobei jeder Opfersteg **(75a, 75b)** bei einer Deckschichtdicke von etwa 73 µm mit einer Dickentoleranz +/- 3 µm einen Abstand von etwa 10 µm mit einer Abstandstoleranz von -5 µm bis +20 µm hat.

## Claims

**1.** A radiation guide switching arrangement (4, 120) having at least one radiation guide switch (2, 100, 100aa - 100dd, 166), produced from a sandwich wafer (39) with a substrate (70), a covering layer (73), and an electrically insulating intermediate layer (71), with each radiation guide switch (2, 100, 100aa - 100dd, 166) having at least one moveable switching part (7, 101, 101aa - 101dd; 152; 165a-d) and at least two radiation guide ends (6, 133aa - 133dd, 134aa-134dd; 170a-f) which come to rest in a plane and are arranged closely adjacent to one another such that radiation which emerges from one radiation guide end (6, 133aa - 133dd, 134aa - 134dd; 151a, 151b; 170a-f) can be blocked on its optical path to another guide end (6, 133aa -133dd, 134aa - 134dd; 151a, 151b; 170a-f), or can be reflected into this other guide end, by means of the switching part (7.1, 7.2, 101, 101aa - 101dd; 165a-d), wherein the intermediate space (5, 135aa - 135dd; 154; 171) which holds the switching part (7, 101, 101aa - 101dd; 152; 165a-d) between the guide ends (6, 133aa - 133dd, 134aa - 134dd; 151a, 151b; 170a-f) is filled with an index matching liquid which has a predetermined refractive index, wherein the radiation-carrying core (8) of each radiation guide (49; 169a-f) projects the fiber front face at the guide end and is designed to taper such that radiation collimation

(14) can be achieved by interaction with the refractive index of the index matching liquid and the free core profile (13) in the space (5,135aa -135dd; 154; 171) which is filled with liquid.

**2.** The arrangement (4,120) as claimed in claim 1, wherein the refractive index of the index matching liquid is at most of equal magnitide to the refractive index of each radiation guiding core (8), and the refractive index of the liquid is preferably between 99.90% and 98.00% with respect to the core refractive index, but is preferably chosen to be between 99.4% and 98.6%.

**3.** The arrangement (4, 120) as claimed in claim 1 or 2 having at least one radiation guide switch (2, 100, 100aa - 100dd; 166) which has a holder (19, 103; 166a-d) for holding the switching part (7, 101, 101aa - 101dd; 165a-d) which can be moved between the radiation guide ends (6, 133aa - 133dd, 134aa - 134dd; 170a-f), each holder (19,103; 166a-d) has at least one first combed structure (23a, 23b; 115, 116) which is connected to it, a second fixed-position comb structure (24a, 24b; 117, 119) which matches the first comb structure (23a, 23b) is provided, whose comb tines (24a, 24b) are arranged with a gap with respect to the first structure (35) , and a first and a second electrical voltage can be applied to the two comb structures (23a, 23b, 24a, 24b; 115, 116, 117, 119) in order to produce an electrostatic movement force, wherein each tine of at least one of the comb structures (23a, 23b, 24a, 24b) has in its free tine end region a region with a broadened cross section, in order to hold the relevant comb structure with an electrostatic voltage applied to it, and hence the switching part (7.2, 101, 101aa - 101dd; 165a-d) in a stable position.

**4.** The arrangement as claimed in claim 3, with at least one leaf spring element (51a, 51b, 52a, 52b; 107, 109) which is firmly connected to the holder (19; 103), and on which the first comb structure (23a, 23b) is preferably in each case arranged, and, in particular, each leaf spring element (51a, 51b, 52a, 52b) is designed such that it runs approximately at right angles to the movement direction of the holder (19).

**5.** The arrangement (4, 120) as claimed in one of claims 1 to 4, wherein each switching part (7, 101, 101aa - 101dd; 165a-d) has at least one surface (74a, 74b) which acts as a mirror for the radiation of the radiation guide.

**6.** The arrangement in particular as claimed in one of claims 1 to 5, wherein the switching part (152) can be inserted into a radiation-carrying space (150) in the intermediate space (154) between in each case two guide ends (151a, 151b) in such a manner that this results in a predetermined attenuation of the radiation, in particular the attenuating part (157) of the switching part (152) which can be inserted into the radiation-carrying space (154) being provided with a metal coating, and the angle between the attenuating part (157) and the flush axis (153) of the two guide ends (151a, 151b) preferably being an angle of less than 65° and preferably of less than 50°, in order to reduce polarization-dependent attenuation caused by the inserted attenuated part.

**7.** The arrangement as claimed in one of claims 1 to 6, with a number .of switching parts (165a-d) in a radiation guide switch (166) , in which case each switching part (165a-d) can be pushed in front of in each case two radiation guide ends (170c/170d; 170b/170d; 170e/170d; 170f/170d) of two radiation guides (169c/169d; 169b/169d; 169e/169d; 169f/169d) such that radiation coupling and/or attenuation are/is possible, and the switching parts (165a-d) are preferably associated with the radiation guide ends (170a-d) such that output radiation from a number of radiation guide ends (170a, 170b, 170c, 170e, 170f) can in each case be coupled individually, depending on the switching position of one of the switching parts (156a-d) , into a single radiation guide end (170d) and/or, in particular, the output radiation from a single radiation guide end can in each case be coupled individually, depending on the switching position of one of the switching parts, into one of the radiation guide ends.

**8.** The arrangement (4, 120) as claimed in one of claims 1 to 7, with a fluid-tight housing with fluid-tight bushings for the radiation guides and the electrical cables, with the housing interior (86) being filled with the index matching liquid except for 10 a gas bubble (88), and the volume of the gas bubble (88) being predetermined such that any pressure in the housing interior (86) as a result of thermal effects is not greater than or less than a predetermined value.

**9.** The arrangement (120) as claimed in one of claims 1 to 8, with a number of switches (100aa - 100dd) which are arranged like a matrix in one plane, preferably on a first chip, with this chip having in particular integrated electrical guide subelements for electrical voltages which can be applied to the switches (100aa - 100dd), and for the optical, and preferably the electrical connections, a second chip, which, is in the form of a waveconductor chip and is preferably applied using flip chip technology, is provided between the switches.

**10.** A method for producing the radiation guide switching arrangement (4, 120) having at least one radiation guide switch (2, 100, 100aa - 100dd; 166) which has a switching part (7, 101, 101aa - 101dd; 165a-d) , in which case the switch part (7.1, 7.2, 101, 101aa - 101dd; 165a-d) can be moved in front of at least two radiation guide ends (6, 133aa -133dd, 134aa - 134dd; 170a-f) which lie in a plane, as claimed in one of claims 1 to 9, produced from a sandwich wafer (39) which has a substrate (70), a covering layer (73) and an electrically insulating intermediate layer (71) , wherein the radiation guide switching arrangement (4; 120) is produced from the sandwich wafer (70), inter alia with the switching part (7, 101, 101aa - 101dd; 165a-d) and the guide channels (1.1aa - 1.1d; 1.2a - 1.2d, 131) for the radiation guides (49; 121a - 121d, 122a -122d; 169a-f) and their ends (6, 133aa - 133dd, 134aa - 134dd; 170a-f) by means of an etching process, during which at least one sacrificial web (75a, 75b) is in each case produced in the immediate vicinity of each of the outer faces (74a, 74b), which run at right angles to the plane, of the switching part (7, 101, 101aa - 101dd; 165a-d), in order to avoid the outer faces (74a, 74b) having a profile which differs from the normal to the plane.

**11.** The method as claimed in claim 10, wherein the sandwich wafer (39) has a covering layer (73) which is composed essentially of silicon and whose unmasked areas are removed in an ion etching process, with each sacrificial web (75a, 75b) being at a distance of approximately 10 µm, with a distance tolerance of -5µm to +20 µm, for a covering layer thickness of approximately 73 µm with a thickness tolerance of +/-3 µm.

## Revendications

**1.** Arrangement de commutateur conducteur de rayonnement (4, 120) avec au moins un commutateur conducteur de rayonnement (2, 100, 100aa-100dd, 166), fabriqué à partir d'une tranche de silicium en sandwich (29) avec un substrat (70), une couche de couverture (73) et une couche intermédiaire isolante électriquement (71), chaque commutateur de conducteur de rayonnement (2, 100, 100aa-100dd ; 166) ayant au moins une partie de commutateur déplaçable (7, 101, 101aa-101dd ; 152 ; 165 a-d) ainsi qu'au moins deux extrémités de conducteur de rayonnement (6, 133aa-133dd, 134aa-134dd ; 170 a-f) qui sont placées de façon tellement voisine l'une de l'autre que le rayonnement sortant d'une extrémité de conducteur de rayonnement (6, 133aa-133dd, 134aa-134dd ; 170 a-f) avec la partie commutateur (7.1, 7.2, 101, 101 aa-101 dd ; 165a-d) peut être bloqué de manière optimale sur sa trajectoire optique vers une autre extrémité de conducteur (6, 133aa-133dd, 134aa-134dd ; 151 a, 151 b ; 170 a-f) ou peut être réfléchie dans celle-ci, l'espace intermédiaire (5, 135aa-135dd ; 154 ; 171) entre les extrémités de conducteur (6, 133aa-133dd, 134aa-134dd ; 151 a, 151 b ; 170a-f) qui loge la partie commutateur (7, 101, 101 aa-101 dd ; 152 ; 165a-d) étant rempli d'un liquide adaptateur d'indice qui présente un indice de réfraction prédéfini, le noyau conducteur de rayonnement (8) de chaque conducteur de rayonnement (49 ; 169a-f) faisant saillie à l'extrémité du conducteur au-delà de la face d'extrémité de la fibre et la zone faisant saillie étant configurée en étant effilée de telle manière qu'une collimation de rayonnement (14) peut être obtenue dans l'espace rempli de liquide (5, 135aa-135dd ; 154 ; 171) en coopération avec l'indice de réfraction du liquide adaptateur d'indice et le profil libre du noyau (13).

**2.** Arrangement (4, 120) selon la revendication 1 pour lequel l'indice de réfraction du liquide adaptateur d'indice est choisi au maximum aussi grand que l'indice de réfraction de chaque noyau conducteur de rayonnement (8) et, de préférence, l'indice de réfraction du liquide est choisi entre 99,90 % et 98,00 % par rapport à l'indice de réfraction du noyau, de préférence cependant entre 99,4 % et 98,6 %.

**3.** Arrangement (4, 120) selon la revendication 1 ou 2 avec au moins un commutateur conducteur de rayonnement (2, 100, 100aa-100d ; 166) qui a un support (19, 103 ; 166a-d) pour supporter la partie commutateur (7, 101, 101aa-101dd ; 165a-d) déplaçable entre les extrémités de conducteur de rayonnement (6, 133aa-133dd ; 134aa-134dd ; 170a-f), chaque support (19, 103 ; 166a-d) présente au moins une première structure de peigne reliée à celui-ci, il existe une seconde structure de peigne (24a, 24b ; 117, 119) stationnaire par rapport à la première structure de peigne (23a, 23b) dont les dents de peigne (24a, 24b) sont placées sur l'intervalle avec la première structure (35) et une première et une seconde tension électrique peuvent être appliquées sur les deux structures de peigne (23a, 23b, 24a, 24b ; 115, 116, 117, 119) pour générer une force de déplacement électrostatique, chaque dent d'au moins l'une des structures de peigne (23a, 23b, 24a, 24b) présentant, dans sa zone d'extrémité libre de dent, un élargissement de section pour tenir la structure de peigne concernée avec une occupation de tension électrostatique et donc la partie de commutateur (7.2, 101, 101 aa-101dd ; 165ad) dans une position stable.

**4.** Arrangement selon la revendication 3 avec au moins un élément de ressort à lames (51a, 51b, 52a, 52b ; 107, 109) relié de manière fixe au support (19 ; 103) sur lequel de préférence respectivement la première structure de

peigne (23a, 23b) est placée et en particulier chaque élément de ressort à lames (51a, 51b, 52a, 52b) est configuré approximativement vertical par rapport au sens de déplacement du support (19).

**5.** Arrangement (4, 120) selon l'une des revendications 1 à 4 pour lequel chaque partie commutateur (7, 101, 101aa-101dd ; 165a-d) a au moins une surface (74a, 74b) qui agit comme un miroir pour le rayonnement du conducteur de rayonnement.

**6.** Arrangement en particulier selon l'une des revendications 1 à 5 pour lequel la partie commutateur (152) peut être insérée dans un espace conducteur de rayonnement (150) dans l'espace intermédiaire (154) entre respectivement deux extrémités de conducteur (151a, 151b) de telle manière qu'il y a une atténuation prédéfinie du rayonnement, en particulier la partie d'atténuation (157) de la partie commutateur (152) qui peut être insérée dans l'espace conducteur de rayonnement (154) est pourvue d'une enduction de métal et, de préférence, l'angle de la partie d'atténuation (157) par rapport à l'axe en alignement (153) des deux extrémités de conducteur (151a, 151b) a un angle inférieur à 65°, de préférence inférieur à 50°, pour réduire une atténuation dépendante de la polarisation par la partie d'atténuation insérée.

**7.** Arrangement selon l'une des revendications 1 à 6 avec plusieurs parties commutateur (165a-d) dans un commutateur conducteur de rayonnement (166), chaque partie commutateur (165a-d) pouvant être poussée devant respectivement deux extrémités de conducteur de rayonnement (170c/170d ; 170b/170d ; 170e/170d ; 170f/170d) de deux conducteurs de rayonnement (169c/169d ; 169b/169d ; 169e/169d ; 169f/169d), qu'un surcouplage ou une atténuation de rayonnement est possible et de préférence les parties commutateur (165a-d) sont affectées aux extrémités des conducteurs de rayonnement (170a-d) de telle manière que des rayonnements de départ de plusieurs extrémités de conducteur de rayonnement (170a, 170b, 170c, 170e, 170f) peuvent être couplées respectivement individuellement selon la position de commutation de l'une des parties commutateur (156a-d) dans une seule extrémité de conducteur de rayonnement (170d) ou en particulier le rayonnement de départ d'une seule extrémité de conducteur de rayonnement peut être couplé respectivement individuellement selon la position de commutation de l'une des parties commutateur dans l'une des autres extrémités de conducteur de rayonnement.

**8.** Arrangement (4, 120) selon l'une des revendications 1 à 7 avec un bâti étanche au liquide avec des passages étanches au liquide pour les conducteurs de rayonnement et les conduites électriques, l'espace intérieur du bâti (86) étant rempli de liquide adaptateur d'indice à part une bulle de gaz (88) et le volume de la bulle de gaz (88) est prédéfini de telle manière que par suite d'effets thermiques une pression dans l'espace intérieur du bâti (86) ne dépasse pas ou n'atteint pas une valeur prédéterminée.

**9.** Arrangement (120) selon l'une des revendications 1 à 8 avec plusieurs commutateurs (100aa-100dd) placés dans un plan à la manière d'une matrice, de préférence sur une première puce, cette puce ayant en particulier des tronçons conducteurs électriques intégrés pour des tensions électriques à appliquer aux commutateurs (100aa-100dd) et une seconde puce appliquée de préférence selon la technique des puces à protubérances, configurée comme une puce de guide d'ondes, existant pour les liaisons optiques et de préférence les liaisons électriques.

**10.** Procédé de fabrication de l'arrangement de commutateur conducteur de rayonnement (4, 120) avec au moins un commutateur conducteur de rayonnement (2, 100, 100aa-100dd, 166) présentant une partie commutateur (7, 101, 101 aa-101 dd ; 165a-d), la partie commutateur (7.1, 7.2, 101, 101 aa-101 dd ; 165a-d) étant déplaçable devant au moins deux extrémités de conducteur de rayonnement (6, 133aaa-133dd, 134aa-134dd ; 170a-f), selon l'une des revendications 1 à 9, fabriqué à partir d'une tranche de silicium en sandwich (39) qui a un substrat (70), une couche de couverture (73) et une couche intermédiaire isolante électriquement (71), l'arrangement de commutateur conducteur de rayonnement (4 ; 120) étant fabriqué par un procédé de gravure à partir de la tranche de silicium en sandwich (70), entre autres avec la partie commutateur (7, 101, 101aa-101dd ; 165 a-d) et les canaux de guidage (1.1a-1.1d ; 1.2a-1.2d, 131) pour les conducteurs de rayonnement (49 ; 121a-121d, 122a-122d ; 169a-f) ou leurs extrémités (6 ; 133aa-133dd, 134aa-134dd ; 170a-f), procédé pour lequel respectivement au moins une barrette sacrificielle (75a, 75b) est produite à proximité immédiate des côtés extérieurs (74a, 74b) de la partie commutateur (7, 101, 101 aa-101 dd ; 165 a-d), verticaux par rapport au plan, pour éviter une allure des côtés extérieurs (74a, 74b) qui diffère de la verticale par rapport au plan.

**11.** Procédé selon la revendication 10 pour lequel la tranche de silicium en sandwich (39) a une couche de couverture (73) qui est constituée substantiellement en silicium dont les zones non masquées sont enlevées dans un procédé de gravure ionique, chaque barrette sacrificielle (75a, 75b) ayant, pour une épaisseur de couche de couverture d'environ 73 μm avec une tolérance d'épaisseur de +/- 3 μm, un écart d'environ 10 μm avec une tolérance d'écart de - 5 μm à +20 μm.

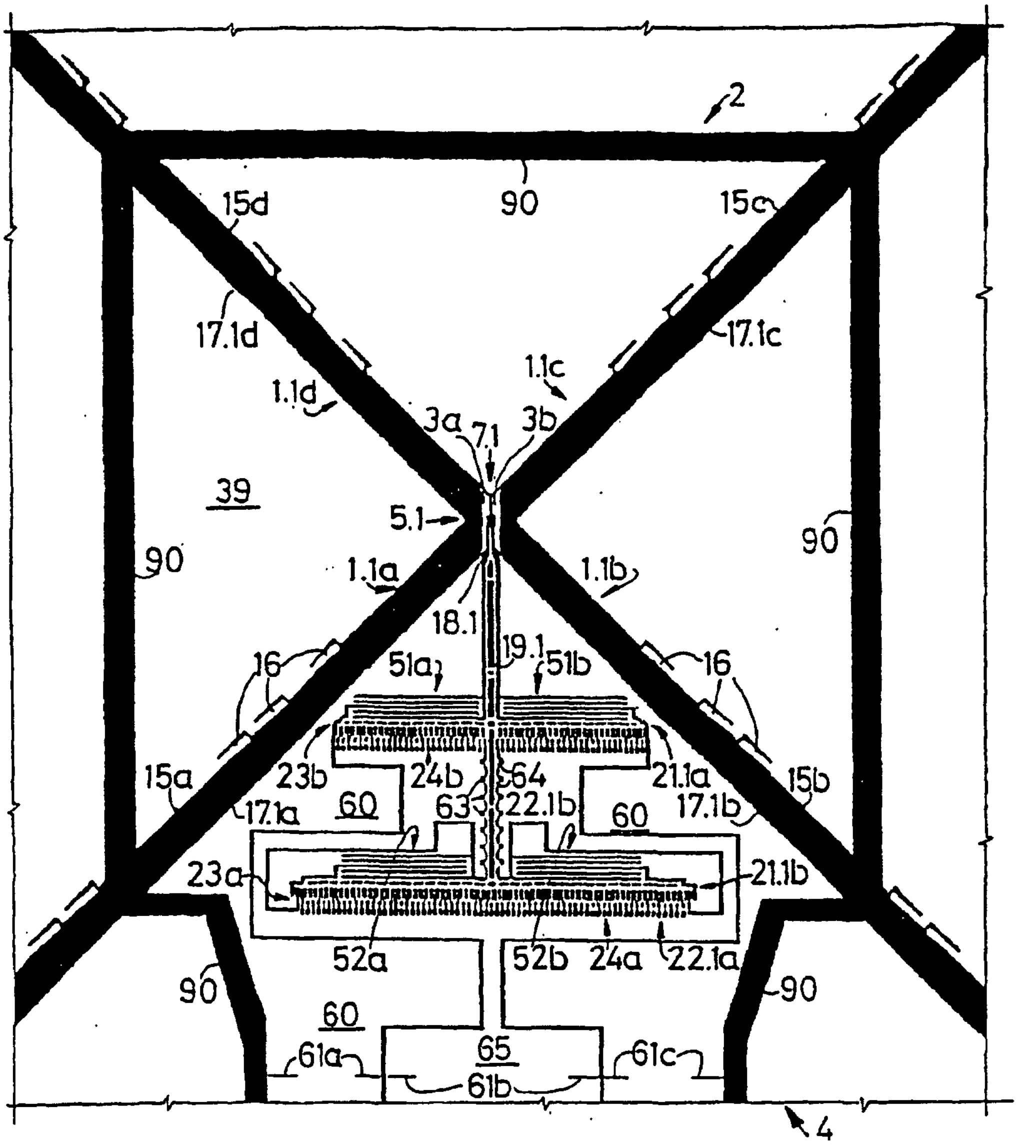
2
90
15d
15c
17.1d
17.1c
1.1c
1.1d
3a
7.1
3b
39
5.1
90
90
1.1a
1.1b
18.1
19.1
16
51a
51b
16
23b
24b
64
21.1a
15a
15b
17.1a
60
63
22.1b
60
17.1b
23a
21.1b
52a
52b
24a
22.1a
90
90
60
65
61a
61b
61c
4

Fig. 1

Fig. 2

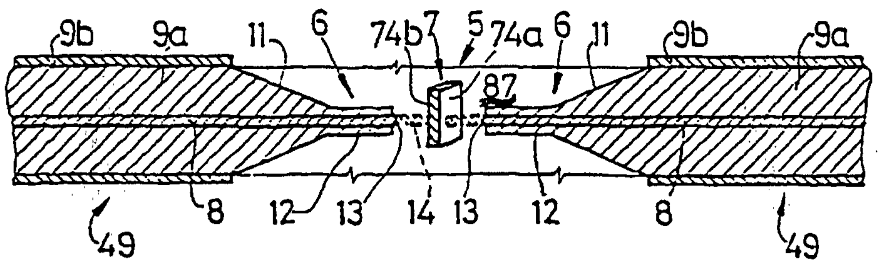
9b
9a
11
6
74b
7
5
74a
6
11
9b
9a
87
8
12
13
14
13
12
8
49
49

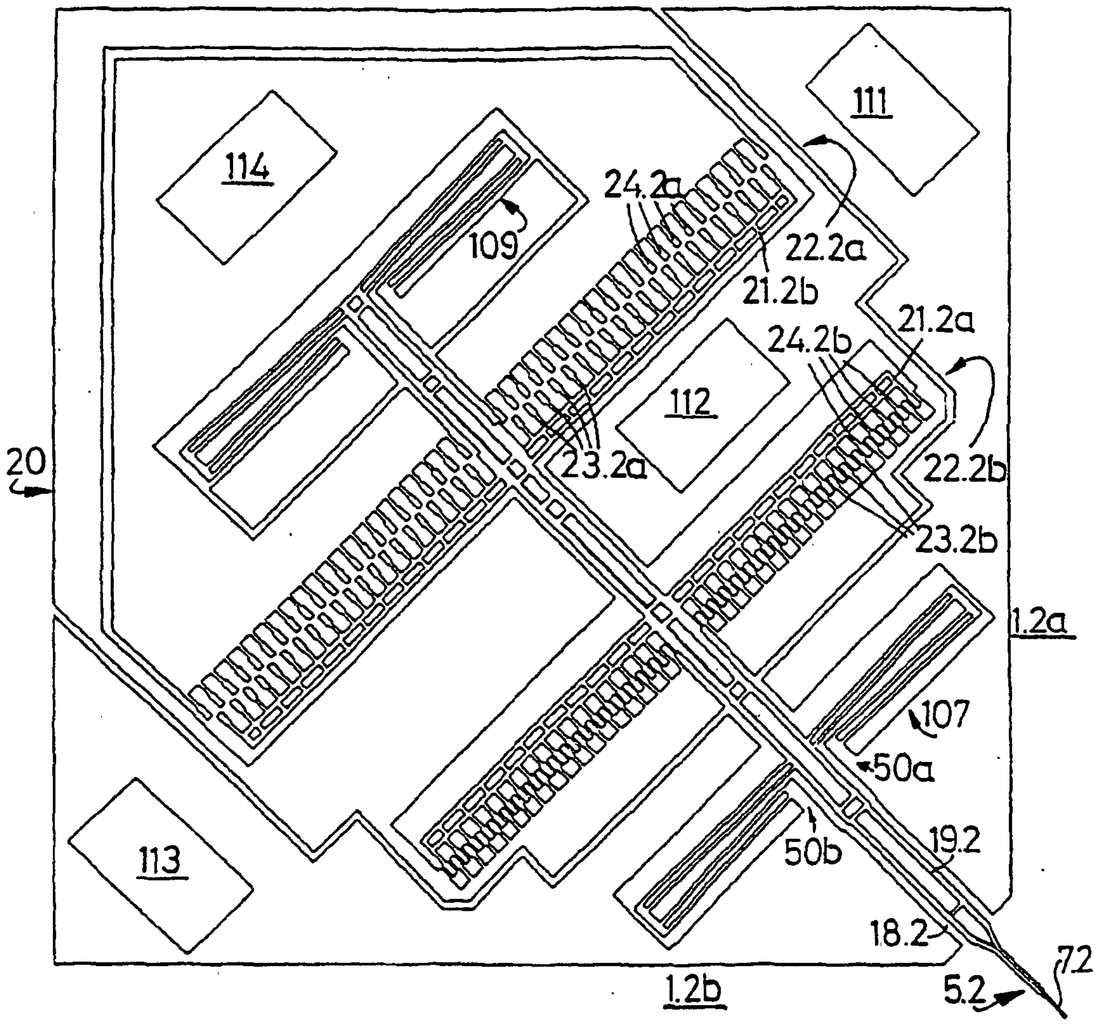
111
114
112
113
24.2a
22.2a
21.2b
21.2a
24.2b
22.2b
23.2a
23.2b
109
20
1.2a
107
50a
50b
19.2
18.2
1.2b
5.2
7.2

Fig. 3a

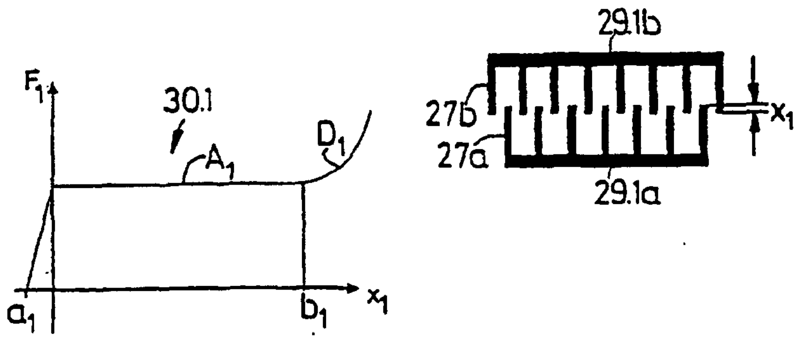


Fig. 4a

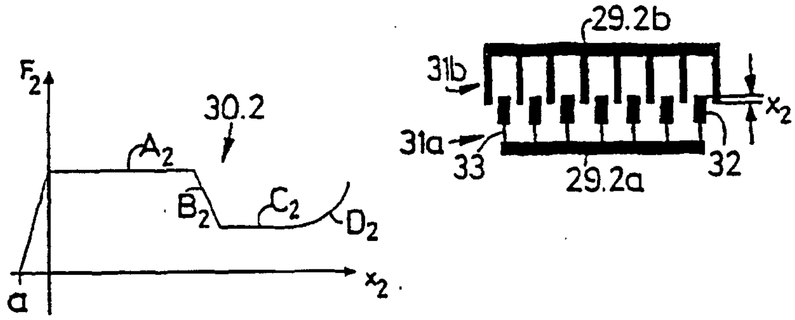


Fig. 4b

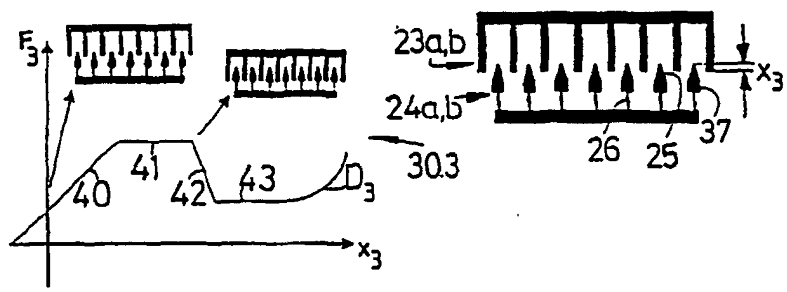


Fig. 4c

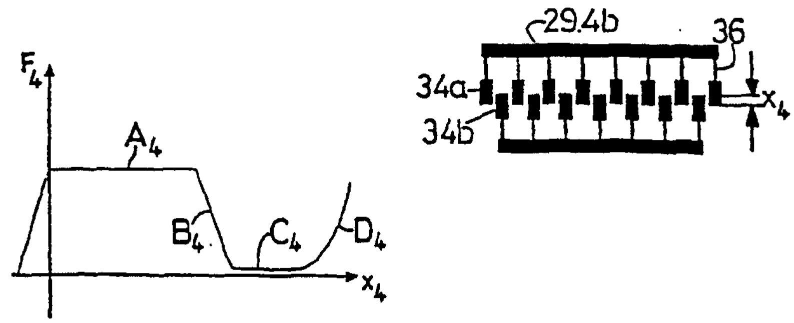


Fig. 4d

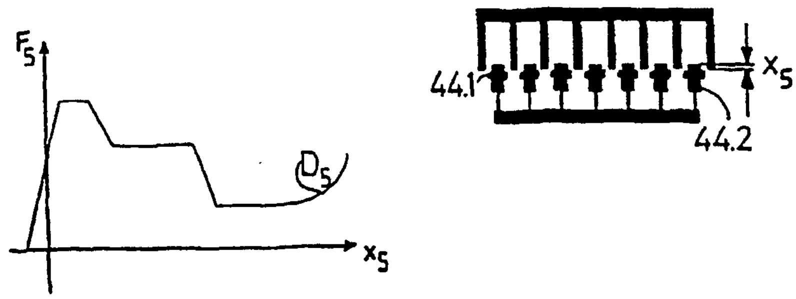


Fig. 4e

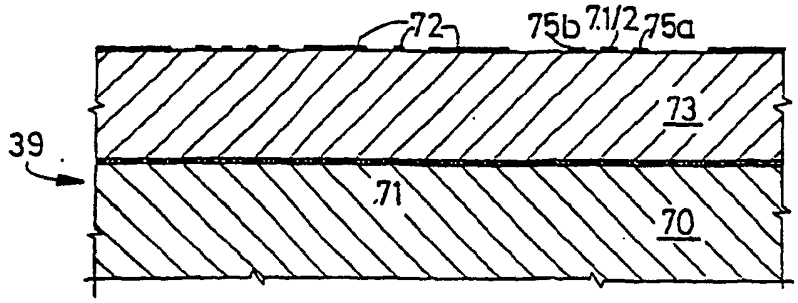


Fig. 5

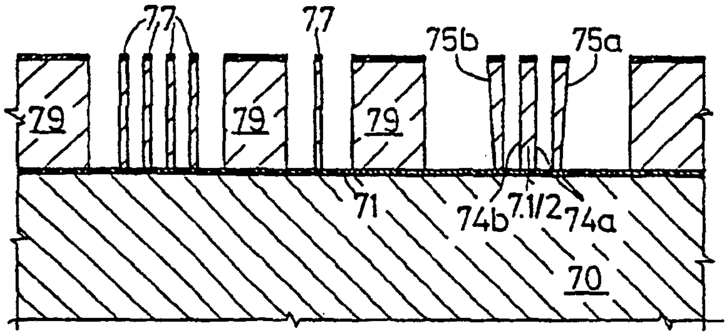


Fig. 6

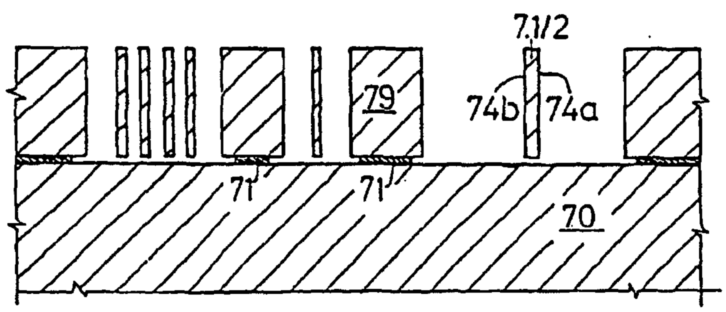


Fig. 7

Fig. 11

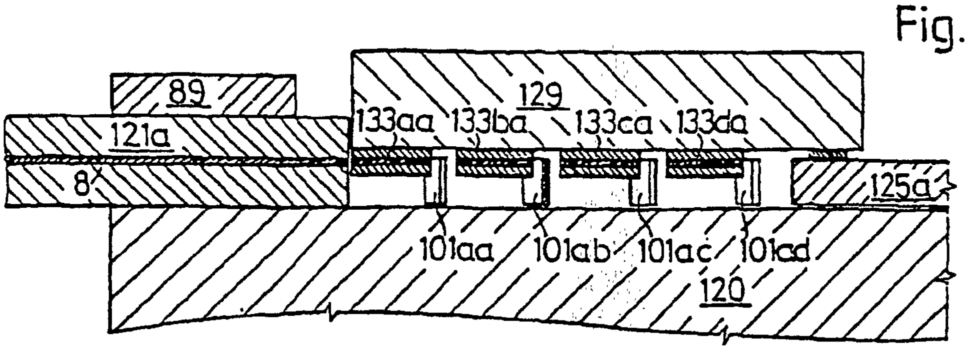

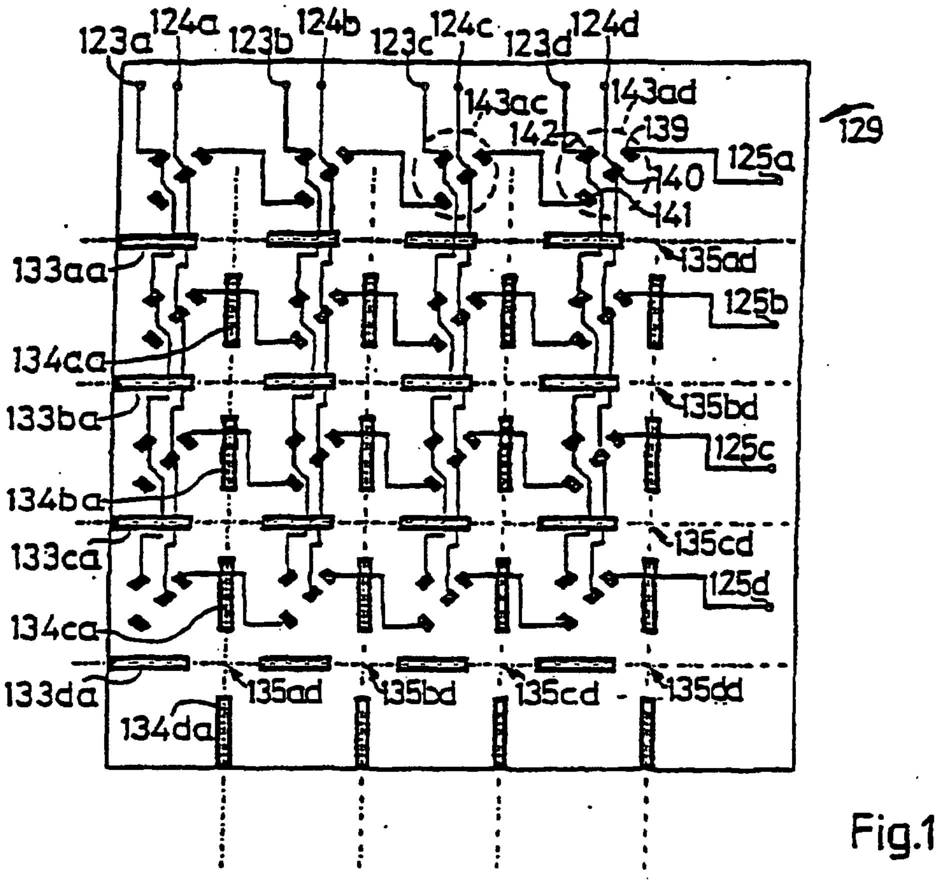
123a
124a
123b
124b
123c
124c
123d
124d
143ac
143ad
142
139
140
141
125a
129
133aa
135ad
125b
134aa
133ba
135bd
125c
134ba
133ca
135cd
125d
134ca
133da
135ad
135bd
135cd
135dd
134da

Fig.10

Fig. 8

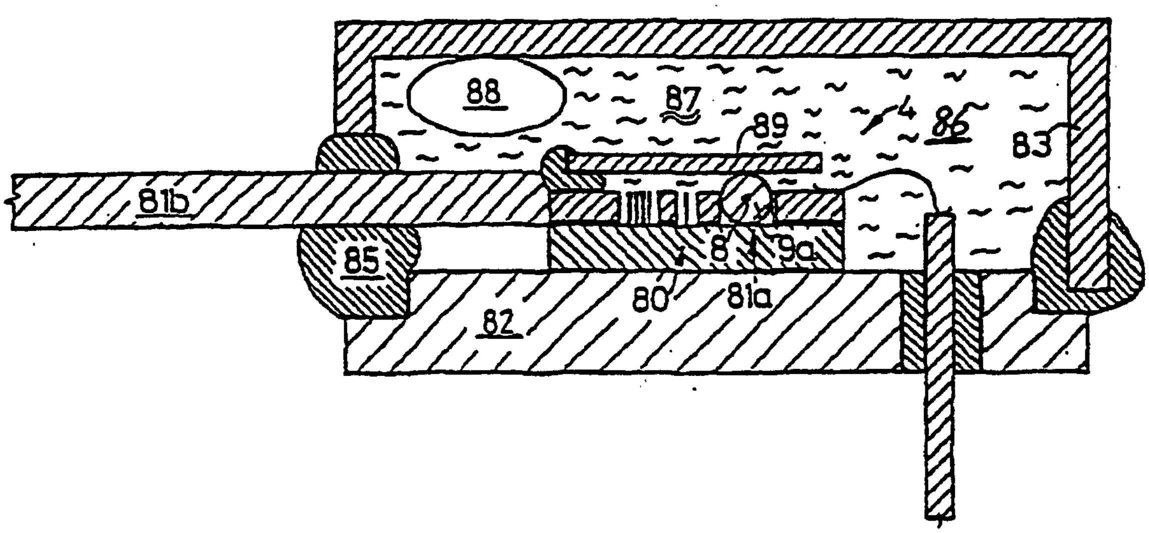
88
87
89
4
86
83
81b
85
8
9a
80
81a
82

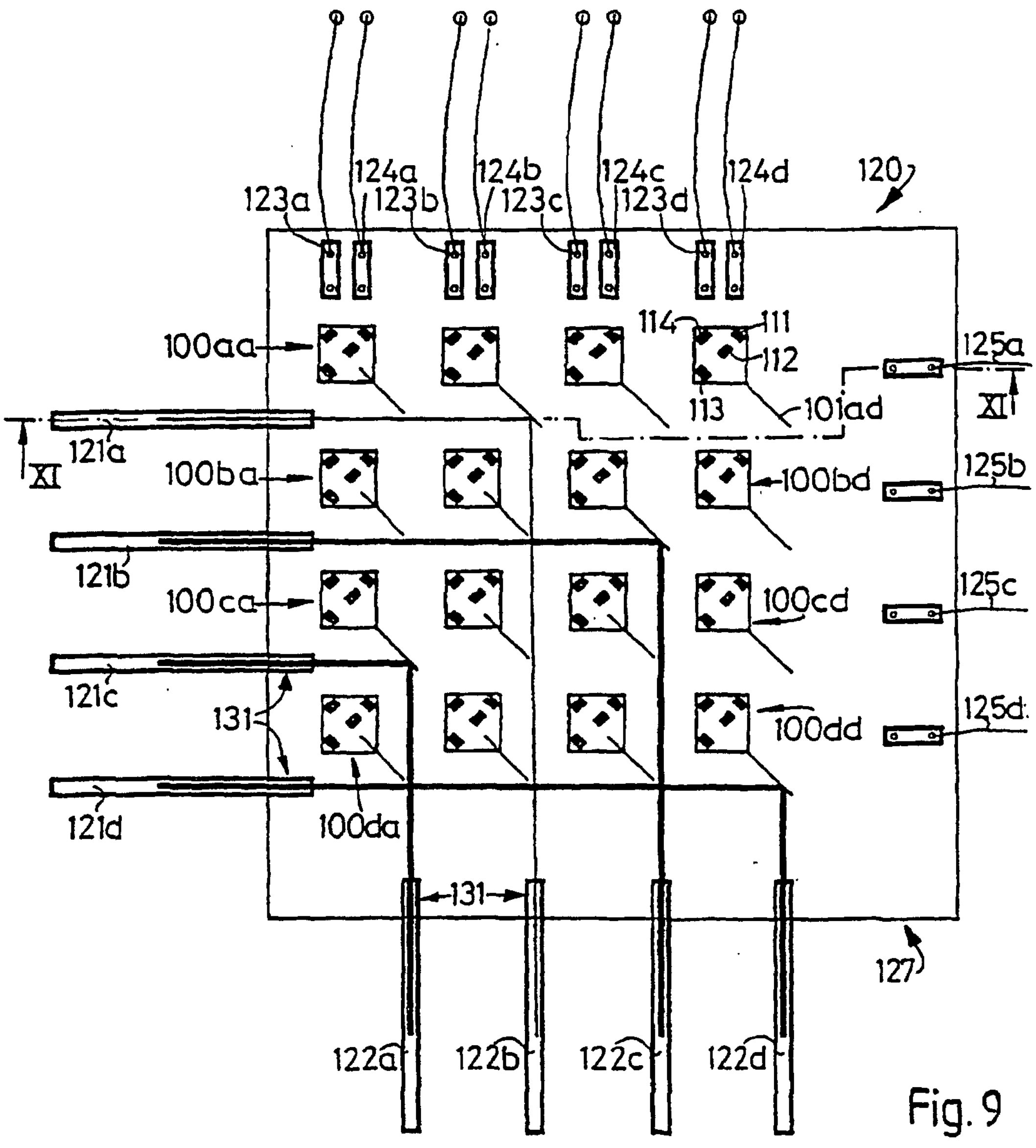
120
123a
124a
123b
124b
123c
124c
123d
124d
114
111
112
113
101ad
100aa
125a
XI
121a
100ba
100bd
125b
121b
100ca
100cd
125c
121c
131
100dd
125d
121d
100da
131
127
122a
122b
122c
122d

Fig. 9

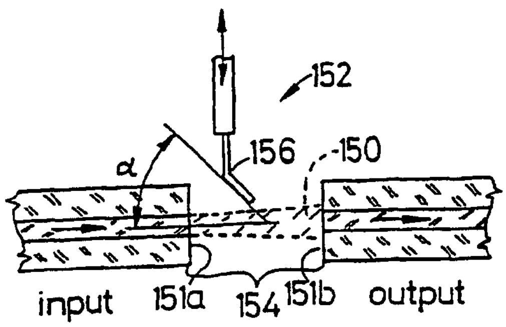


Fig. 12

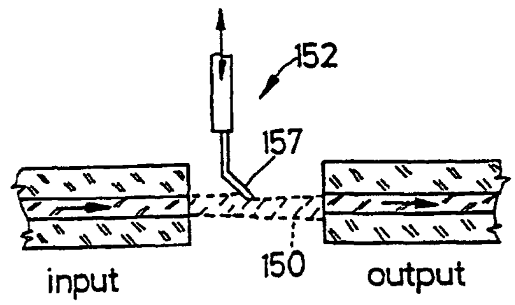


Fig. 13

Fig. 14

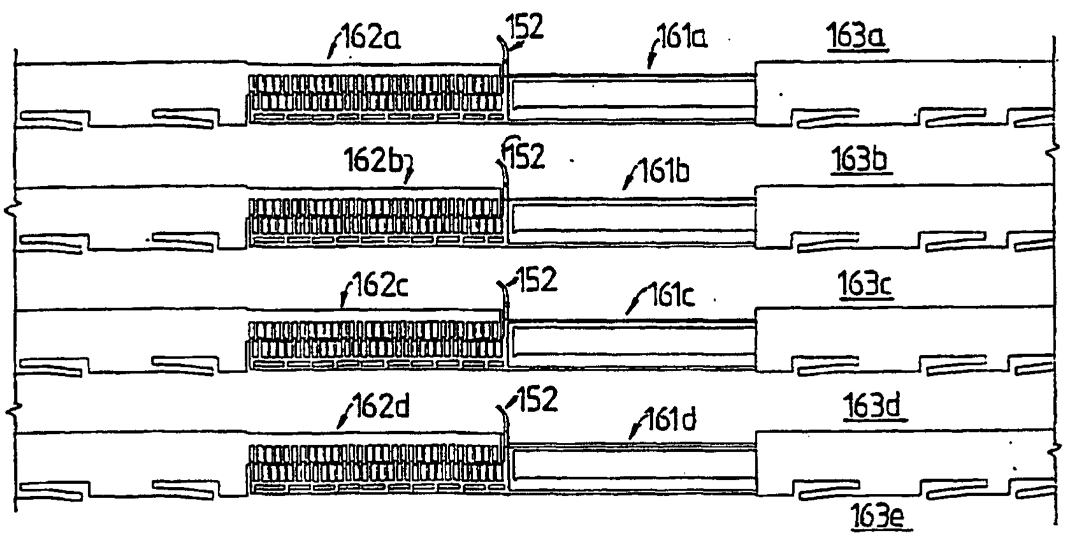

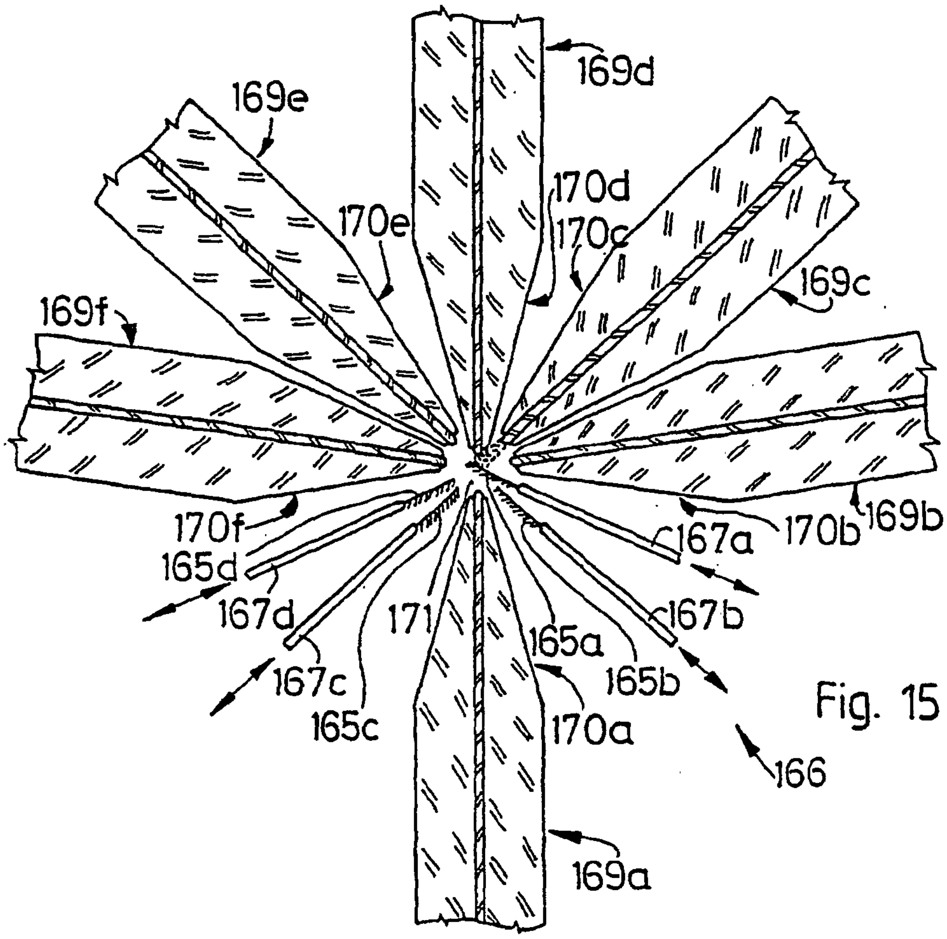
169d
169e
170d
170e
170c
169c
169f
170f
167a
170b
169b
165d
167d
167b
171
165a
167c
165b
165c
170a
166
169a

Fig. 15

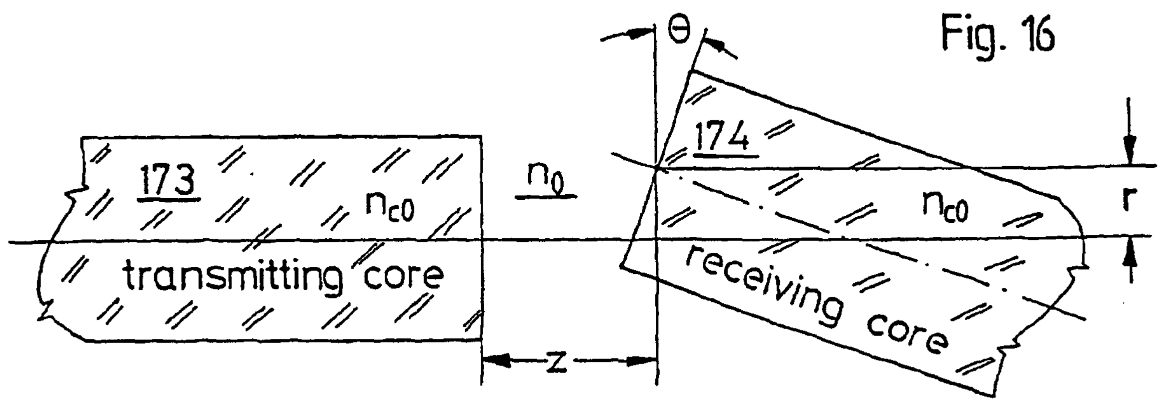
θ
174
173
$n_0$
$n_{c0}$
$n_{c0}$
r
transmitting core
receiving core
z

Fig. 16

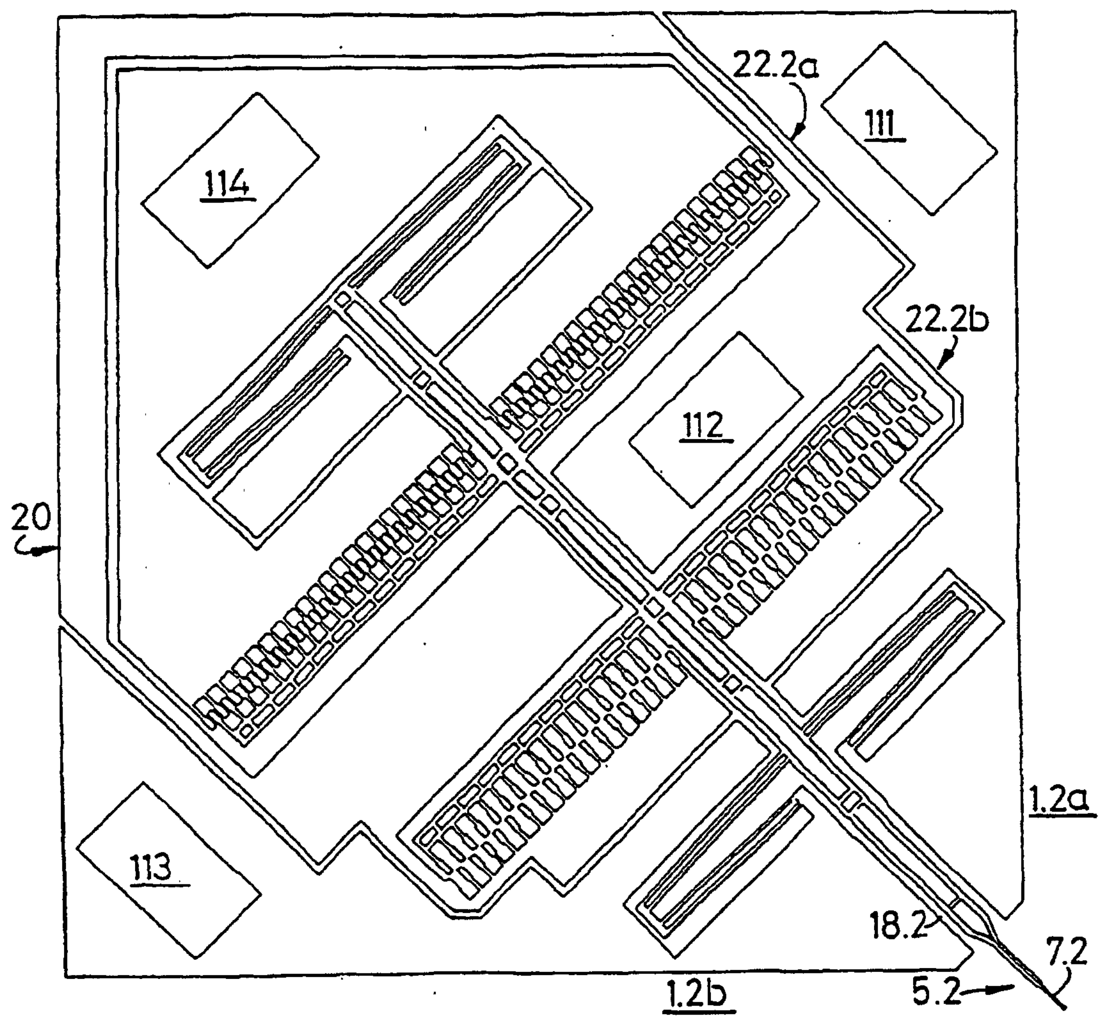


Fig. 3b